(19) Europäisches Patentamt
European Patent Office
Office européen des brevets

(11) EP 4 391 117 A1

(12) **EUROPEAN PATENT APPLICATION**
published in accordance with Art. 153(4) EPC

(43) Date of publication:
**26.06.2024 Bulletin 2024/26**

(21) Application number: **22876571.5**

(22) Date of filing: **30.09.2022**

(51) International Patent Classification (IPC):
***H01M 4/62*** *(2006.01)* ***H01M 4/02*** *(2006.01)*
***H01M 4/13*** *(2010.01)*

(52) Cooperative Patent Classification (CPC):
**H01M 4/02; H01M 4/13; H01M 4/62;** Y02E 60/10

(86) International application number:
**PCT/JP2022/036846**

(87) International publication number:
**WO 2023/054709 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161568**
**10.08.2022 JP 2022128277**

(71) Applicant: **Daikin Industries, Ltd.**
**Osaka-shi, Osaka 530-0001 (JP)**

(72) Inventors:
- **KATO, Taketo**
  **Osaka-shi, Osaka 530-0001 (JP)**
- **YAMADA, Takaya**
  **Osaka-shi, Osaka 530-0001 (JP)**
- **YASUDA, Kohei**
  **Osaka-shi, Osaka 530-0001 (JP)**
- **YAMANAKA, Taku**
  **Osaka-shi, Osaka 530-0001 (JP)**
- **TERADA, Junpei**
  **Osaka-shi, Osaka 530-0001 (JP)**
- **YAMADA, Masahiko**
  **Osaka-shi, Osaka 530-0001 (JP)**
- **USAMI, Ryota**
  **Osaka-shi, Osaka 530-0001 (JP)**
- **SATO, Hiroyuki**
  **Osaka-shi, Osaka 530-0001 (JP)**
- **YAMAMOTO, Emi**
  **Osaka-shi, Osaka 530-0001 (JP)**
- **NISHIMURA, Kenta**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **POLYTETRAFLUOROETHYLENE POWDER, BINDER FOR ELECTRODE, ELECTRODE MIXTURE, ELECTRODE, AND SECONDARY BATTERY**

(57) The disclosure aims to provide a polytetrafluoroethylene powder for an electrode binder which can not only reduce or prevent gas generation inside a battery cell and deterioration of battery characteristics but also improve the electrode strength, an electrode binder, an electrode mixture, an electrode, and a secondary battery. Provided is a polytetrafluoroethylene powder for use as an electrode binder, the polytetrafluoroethylene having a standard specific gravity of 2.200 or less and being substantially free from water.

EP 4 391 117 A1

## Description

TECHNICAL FIELD

The disclosure relates to polytetrafluoroethylene powders, electrode binders, electrode mixtures, electrodes, and secondary batteries.

BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in battery characteristics are desired.

Patent Literature 1 discloses an energy storage device in which at least one of the cathode or the anode includes a polytetrafluoroethylene composite binder material.

Patent Literature Documents 2 and 3 each describe use of an aqueous dispersion of polytetrafluoroethylene as a binder for batteries.

CITATION LIST

- Patent Literature

Patent Literature 1: JP 2017-517862 T
Patent Literature 2: JP 2004-31179 A
Patent Literature 3: JP H11-343317 A

SUMMARY OF INVENTION

- Technical Problem

The disclosure aims to provide a polytetrafluoroethylene powder for an electrode binder which can not only reduce or prevent gas generation inside a battery cell and deterioration of battery characteristics but also improve electrode strength, an electrode binder, an electrode mixture, an electrode, and a secondary battery.

- Solution to Problem

The disclosure (1) provides a polytetrafluoroethylene powder for use as an electrode binder, the polytetrafluoroethylene powder having a standard specific gravity of 2.200 or less and being substantially free from water.

The disclosure (2) provides an electrode binder consisting essentially of a polytetrafluoroethylene powder, the polytetrafluoroethylene powder having a standard specific gravity of 2.200 or less and being substantially free from water.

The disclosure (3) relates to the electrode binder of the disclosure (2), wherein the water amounts to 0.050% by mass or less in the polytetrafluoroethylene powder.

The disclosure (4) relates to the electrode binder according to the disclosure (2) or (3), wherein the polytetrafluoroethylene powder has an extrusion pressure at a reduction ratio of 100 of 10 MPa or higher.

The disclosure (5) relates to the electrode binder in any combination with any one of the disclosures (2) to (4), wherein the polytetrafluoroethylene powder is expandable.

The disclosure (6) relates to the electrode binder in any combination with any one of the disclosures (2) to (5), wherein the polytetrafluoroethylene contains a tetrafluoroethylene unit and a modifying monomer unit based on a modifying monomer copolymerizable with tetrafluoroethylene.

The disclosure (7) relates to the electrode binder according to the disclosure (6), wherein the modifying monomer includes at least one selected from the group consisting of perfluoro(methyl vinyl ether) and hexafluoropropylene.

The disclosure (8) relates to the electrode binder in any combination with any one of the disclosures (2) to (7), wherein the polytetrafluoroethylene powder has an average primary particle size of 100 to 350 nm.

The disclosure (9) provides an electrode mixture containing: the polytetrafluoroethylene powder of the disclosure (1) or the electrode binder in any combination with any one of the disclosures (2) to (8); and an electrode active material.

The disclosure (10) provides an electrode including: the polytetrafluoroethylene powder of the disclosure (1) or the electrode binder in any combination with any one of the disclosures (2) to (8); an electrode active material; and a current collector.

The disclosure (11) provides a secondary battery including the electrode of the disclosure (10).

- Advantageous Effects of Invention

The disclosure can provide a polytetrafluoroethylene powder for an electrode binder which can not only reduce or prevent gas generation inside a battery cell and deterioration of battery characteristics but also improve electrode strength, an electrode binder, an electrode mixture, an electrode, and a secondary battery.

DESCRIPTION OF EMBODIMENTS

The disclosure will be specifically described below.

The disclosure provides a polytetrafluoroethylene (PTFE) powder for use as an electrode binder, the PTFE powder having a standard specific gravity of 2.200 or less and being substantially free from water.

The PTFE powder of the disclosure having the above configuration, when used as an electrode binder, can reduce or prevent gas generation inside the battery cell and deterioration of battery characteristics (e.g., decrease in capacity during storage at high temperature) and can improve electrode strength. Since the PTFE powder of the disclosure is substantially free from water, the electrode active material to be used together can be selected from a wide range of selections, which is advantageous in terms of the production process. The PTFE powder of the disclosure can be mixed with electrode active materials as it is, and there is no need to use organic solvents, which can reduce the process and cost derived from use of organic solvents. Moreover, the PTFE powder of the disclosure has excellent binding force to active materials, which can reduce the amount of the PTFE powder used.

The PTFE powder of the disclosure has a standard specific gravity (SSG) of 2.200 or less. The PTFE powder having a SSG within the above range can further reduce or prevent gas generation and deterioration of battery characteristics and can also improve electrode strength.

The SSG is preferably 2.180 or less, more preferably 2.170 or less, still more preferably 2.160 or less, further more preferably 2.150 or less, further more preferably 2.145 or less, particularly preferably 2.140 or less.

The SSG is also preferably 2.130 or more.

The SSG is determined by the water displacement method in conformity with ASTM D792 using a sample molded in conformity with ASTM D4895.

The PTFE powder of the disclosure preferably has an average primary particle size of 100 to 350 nm. With the average primary particle size within the above range, the PTFE has a high molecular weight, which leads to improved binding force and improved electrode flexibility.

The average primary particle size is more preferably 330 nm or smaller, still more preferably 320 nm or smaller, further more preferably 300 nm or smaller, further more preferably 280 nm or smaller, particularly preferably 250 nm or smaller, while more preferably 150 nm or greater, still more preferably 170 nm or greater, further more preferably 200 nm or greater.

The average primary particle size is measured by the following method.

A PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

The PTFE powder of the disclosure may have an average secondary particle size of 350 um or greater, preferably 400 um or greater, more preferably 450 um or greater, still more preferably 500 um or greater, further more preferably 550 um or greater, particularly preferably 600 um or greater, while preferably 1000 um or smaller, more preferably 900 um or smaller, still more preferably 800 um or smaller, further more preferably 700 um or smaller.

The average secondary particle size is measured in conformity with JIS K 6891.

In order to further reduce or prevent gas generation and deterioration of battery characteristics and to achieve improved binding force, improved electrode strength, and improved electrode flexibility, the PTFE powder of the disclosure preferably has an extrusion pressure at a reduction ratio (RR) of 100 of 10 MPa or higher, more preferably 12 MPa or higher, still more preferably 15 MPa or higher, further more preferably 16 MPa or higher, particularly preferably 17 MPa or higher.

In order to achieve improved processability, the extrusion pressure at a RR of 100 is preferably 50 MPa or lower, more preferably 40 MPa or lower, still more preferably 35 MPa or lower, further more preferably 30 MPa or lower, further more preferably 25 MPa or lower, further more preferably 21 MPa or lower, particularly preferably 20 MPa or lower.

In order to further reduce or prevent gas generation and deterioration of battery characteristics and to achieve improved binding force, improved electrode strength, and improved electrode flexibility, the PTFE powder of the disclosure preferably has an extrusion pressure at a RR of 300 of preferably 18 MPa or higher, more preferably 23 MPa or higher, still more preferably 25 MPa or higher, further more preferably 28 MPa or higher, even more preferably 30 MPa or higher, particularly preferably 32 MPa or higher.

In order to improve the processability, the extrusion pressure at a RR of 300 is preferably 45 MPa or lower, more preferably 40 MPa or lower.

The extrusion pressure at a RR of 100 is measured by the following method.

Fifty grams of PTFE powder and 10.25 g of hydrocarbon oil (trade name: Isopar-E, available from ExxonMobil Corporation) as an extrusion aid are mixed for three minutes in a polyethylene container. A cylinder of an extruder is filled with the resulting mixture at room temperature (25 $\pm$ 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice (reduction ratio) is 100. The value obtained by dividing the load (N) at which the pressure is in equilibrium in the latter half of the extrusion operation by the cylinder cross-sectional area is defined as the extrusion pressure (MPa).

The extrusion pressure at a RR of 300 is measured by the following method.

Fifty grams of PTFE powder and 11.00 g of hydrocarbon oil (trade name: Isopar-E, available from Exxon Mobil Corporation) as an extrusion aid are mixed for three minutes in a polyethylene container. A cylinder of an extruder is filled with the resulting mixture at room temperature (25 $\pm$ 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice (reduction ratio) is 300. The value obtained by dividing the load (N) at which the pressure is in equilibrium in the latter half of the extrusion operation by the cylinder cross-sectional area is defined as the extrusion pressure (MPa).

In order to further reduce or prevent gas generation and deterioration of battery characteristics and to achieve improved binding force, improved electrode strength, and improved electrode flexibility, the PTFE powder of the disclosure is preferably expandable.

The term "expandable" means that an expanded article is obtainable in the following expansion test.

The bead obtained by the paste extrusion at a RR of 100 described above is dried at 230°C for 30 minutes to remove the lubricant. The dried bead is cut into appropriate lengths and placed in a furnace heated to 300°C. The cut beads are expanded in the furnace at an expanding speed of 100%/sec.

In order to further reduce or prevent gas generation and deterioration of battery characteristics and to achieve improved binding force, improved electrode strength, and improved electrode flexibility, the PTFE powder of the disclosure is preferably expandable to 25 times its size.

Whether or not it is expandable to 25 times its size can be determined by the following expansion test.

The bead obtained by the paste extrusion at a RR of 100 described above is dried at 230°C for 30 minutes to remove the lubricant. The dried bead is cut into appropriate lengths and placed in a furnace heated to 300°C. The cut beads are expanded in the furnace at an expanding speed of 100%/sec until the bead length reaches 25 times the length before the expansion test. If no breakage occurs during the expansion, the bead is determined to be expandable to 25 times its size.

In order to achieve excellent handleability, the PTFE powder of the disclosure may have an average aspect ratio of 2.0 or lower, preferably 1.8 or lower, more preferably 1.7 or lower, still more preferably 1.6 or lower, further more preferably 1.5 or lower, further more preferably 1.4 or lower, even more preferably 1.3 or lower, particularly preferably 1.2 or lower, most preferably 1.1 or lower. The average aspect ratio may also be 1.0 or higher.

The average aspect ratio is determined as follows. A PTFE powder or a PTFE aqueous dispersion diluted to a solid content concentration of about 1% by mass is observed using a scanning electron microscope (SEM) and 200 or more randomly extracted particles are imaged. The average of the ratios of the major axes to the minor axes of the particles is determined as the average aspect ratio.

In order to achieve excellent handleability, the PTFE powder of the disclosure preferably has an apparent density of 0.40 g/mL or higher, more preferably 0.43 g/mL or higher, still more preferably 0.45 g/mL or higher, further more preferably 0.48 g/mL or higher, particularly preferably 0.50 g/mL or higher. The upper limit is not limited, and may be 0.70 g/mL.

The apparent density is determined in conformity with JIS K 6892.

The PTFE powder of the disclosure preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer

does not easily flow even within a melting point range.

The PTFE may be a homopolymer of tetrafluoroethylene (TFE) or may be a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of a TFE unit and a modifying monomer unit.

In order to further reduce or prevent gas generation and deterioration of battery characteristics and to achieve improved binding force, improved electrode strength, and improved electrode flexibility, the PTFE is preferably the modified PTFE.

In order to further reduce or prevent gas generation and deterioration of battery characteristics and to achieve improved expandability, improved binding force, improved electrode strength, and improved electrode flexibility, the modified PTFE preferably contains a modifying monomer unit in an amount falling within a range of 0.00001 to 1.0% by mass in all polymerized units. The lower limit of the amount of the modifying monomer unit is more preferably 0.0001% by mass, still more preferably 0.001% by mass, further more preferably 0.005% by mass, even more preferably 0.010% by mass. The upper limit of the amount of the modifying monomer unit is preferably 0.90% by mass, more preferably 0.80% by mass, more preferably 0.50% by mass, still more preferably 0.40% by mass, further more preferably 0.30% by mass, further more preferably 0.20% by mass, further more preferably 0.15% by mass, further more preferably 0.10% by mass, further more preferably 0.08% by mass, particularly preferably 0.05% by mass, most preferably 0.03% by mass.

The modifying monomer unit herein means a portion constituting the molecular structure of PTFE and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; a (perfluoroalkyl)ethylene; and ethylene. These modifying monomers may be used alone or in combination.

The perfluorovinyl ether may be, but is not limited to, an unsaturated perfluoro compound represented by the following formula (A):

$$CF_2=CF-ORf \qquad (A)$$

(wherein Rf is a perfluoro organic group). The term "perfluoro organic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include:

those represented by the formula (A) wherein Rf is a C4-C9 perfluoro(alkoxyalkyl) group;

those represented by the formula (A) wherein Rf is a group represented by the following formula:

[Chem. 1]

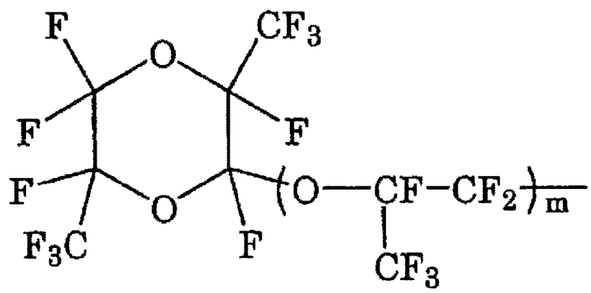

wherein m is 0 or an integer of 1 to 4; and

those represented by the formula (A) wherein Rf is a group represented by the following formula:

[Chem. 2]

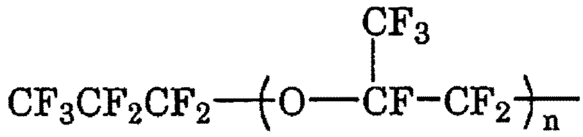

wherein n is an integer of 1 to 4.

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

$$CF_2=CF-CF_2-ORf^1 \qquad (B)$$

wherein $Rf^1$ is a perfluoro organic group.

$Rf^1$ is preferably a C1-C10 perfluoroalkyl group or a C1-C10 perfluoroalkoxyalkyl group. The perfluoroallyl ether preferably includes at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably includes at least one selected from the group consisting of $CF_2=CF-CF_2-O-C_2F_5$, $CF_2=CF-CF_2-O-C_3F_7$, and $CF_2=CF-CF_2-O-C_4F_9$, and is still more preferably $CF_2=CF-CF_2-O-CF_2CF_2CF_3$.

In order to achieve improved expandability, improved binding force, and improved electrode flexibility, the modifying monomer preferably includes at least one selected from the group consisting of PAVE and HFP, more preferably at least one selected from the group consisting of perfluoro(methyl vinyl ether) (PMVE) and HFP.

For formation of an electrode mixture sheet with still higher strength, the different modifying monomer preferably includes at least one selected from the group consisting of VDF, HFP, CTFE, and PAVE, more preferably at least one selected from the group consisting of VDF, HFP, and CTFE.

In order to achieve improved heat resistance, in a preferred embodiment, the PTFE contains a TFE unit, a VDF unit, and a HFP unit, and the total amount of the VDF unit and the HFP unit is 1.0% by mass or less in all the polymerized units.

The PTFE may have a core-shell structure. An example of the PTFE having a core-shell structure is a modified PTFE including a core of high-molecular-weight PTFE in a particle and a shell of lower-molecular-weight PTFE or modified PTFE. An example of such a modified PTFE is a PTFE disclosed in JP 2005-527652 T.

For formation of an electrode mixture sheet with still higher strength, the PTFE preferably has an endothermic peak temperature of 320°C or higher, more preferably 325°C or higher, still more preferably 330°C or higher, further more preferably 335°C or higher, further more preferably 340°C or higher, further more preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on a fluororesin that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve drawn by increasing the temperature at a rate of 10°C/min using a differential scanning calorimeter (DSC), and has an enthalpy of fusion of 62 mJ/mg or higher at 290°C to 350°C calculated from the heat-of-fusion curve.

For formation of an electrode mixture sheet with still higher strength, the PTFE preferably has a number average molecular weight (Mn) of $3.0 \times 10^6$ or more, more preferably $3.2 \times 10^6$ or more, still more preferably $3.5 \times 10^6$ or more, further more preferably $3.7 \times 10^6$ or more, particularly preferably $4.0 \times 10^6$ or more. The number average molecular weight is preferably $7.0 \times 10^6$ or less, more preferably $6.5 \times 10^6$ or less, still more preferably $6.0 \times 10^6$ or less, further more preferably $5.5 \times 10^6$ or less, particularly preferably $5.0 \times 10^6$ or less.

The number average molecular weight is the molecular weight determined in conformity with the method described in the following literature, based on the heat of crystallization estimated by performing temperature drop measurement with a differential scanning calorimeter (DSC) on the molten fluororesin. The measurement is performed five times, and the average of the three values excluding the maximum and minimum values is used.

Literature: Suwa, T.; Takehisa, M.; Machi, S., J. Appl. Polym. Sci. vol. 17, pp. 3253 (1973).

The PTFE powder of the disclosure is substantially free from water. Such a PTFE powder can further reduce or prevent gas generation and deterioration of battery characteristics and improve electrode strength. Moreover, the electrode active material to be used together can be selected from a wide range of selections, which is advantageous

in terms of the production process. The phrase "substantially free from water" means that the water content of the PTFE powder is 0.050% by mass or less.

The water content is preferably 0.040% by mass or less, more preferably 0.020% by mass or less, still more preferably 0.010% by mass or less, further more preferably 0.005% by mass or less, particularly preferably 0.002% by mass or less.

The water content is determined by the following method.

The mass of the PTFE powder is weighed before and after heating at 150°C for two hours, and the water content is calculated by the following formula. The sample is taken three times, and this calculation is performed for each sample and the values are averaged.

Water content (% by mass) = [ (mass (g) of PTFE powder before heating) - (mass (g) of PTFE powder after heating) ] / (mass (g) of PTFE powder before heating) $\times$ 100

The PTFE powder of the disclosure is preferably substantially free from a fluorine-containing compound having a molecular weight of 1000 or less. The phrase "substantially free from a fluorine-containing compound" means that the amount of the fluorine-containing compound is 25 ppb by mass or less in the PTFE powder.

The amount of the fluorine-containing compound is more preferably less than 25 ppb by mass, still more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The amount of the fluorine-containing compound having a molecular weight of 1000 or less is measured by the following method.

To a 1-g portion of a sample weighed is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower detection limit in this measurement method is 10 ppb by mass.

The amount of the fluorine-containing compound having a molecular weight of 1000 or less can also be measured by the following method.

To a 1-g portion of a sample weighed is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Methanol standard solutions having five different known levels of fluorine-containing compound concentrations were prepared, and analyzed using a liquid chromatograph mass spectrometer. By first order approximation based on the methanol standard solution concentrations and the peak integral values in each concentration range, a calibration curve was created. The amount of the fluorine-containing compound contained in the extract is determined from the calibration curve, and converted to the amount of the fluorine-containing compound contained in the sample.

The lower detection limit in this measurement method is 1 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to PTFE. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include PTFE.

The hydrophilic group may be, for example, -COOM, - $SO_2M$, or -$SO_3M$, and examples include anionic groups

such as -COOM and -$SO_3M$ wherein M is H, a metal atom, $NR^1_4$, imidazolium optionally containing a substituent, pyridinium optionally containing a substituent, or phosphonium optionally containing a substituent; and $R^1$ is H or an organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of $F(CF_2)_{n1}COOM$, the anionic portion refers to the portion "$F(CF_2)_{n1}COO$".

An example of the fluorine-containing anionic surfactant is a compound represented by the following formula (N°):

$$X^{n0}\text{-}Rf^{n0}\text{-}Y^0 \qquad (N^0)$$

wherein $X^{n0}$ is H, Cl, or/and F; $Rf^{n0}$ is a C3-C20 linear, branched, or cyclic alkylene group in which part or all of H atoms are replaced by F atoms, the alkylene group optionally containing one or more ether bonds with one or more H atoms being optionally replaced by Cl; and Y° is an anionic group.

The anionic group for Y° may be -COOM, -$SO_2M$, or - $SO_3M$, and may be -COOM or -$SO_3M$.

M is H, a metal atom, $NR^1_4$, imidazolium optionally containing a substituent, pyridinium optionally containing a substituent, or phosphonium optionally containing a substituent, wherein $R^1$ is H or an organic group.

Examples of the metal atom include an alkali metal (Group 1) and an alkaline earth metal (Group 2), such as Na, K, and Li.

$R^1$ may be H or a $C_{1-10}$ organic group, may be H or a $C_{1-4}$ organic group, and may be H or a $C_{1-4}$ alkyl group.

M may be H, a metal atom, or $NR^1_4$, may be H, an alkali metal (Group 1), an alkaline earth metal (Group 2), or $NR^1_4$, and may be H, Na, K, Li, or $NH_4$.

In $Rf^{n0}$, 50% or more of H atoms may be replaced by fluorine.

The fluorine-containing surfactant may be a single fluorine-containing surfactant or a mixture containing two or more fluorine-containing surfactants.

Examples of the fluorine-containing surfactant include compounds represented by the following formulas. The fluorine-containing surfactant may be a mixture of these compounds:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 3]

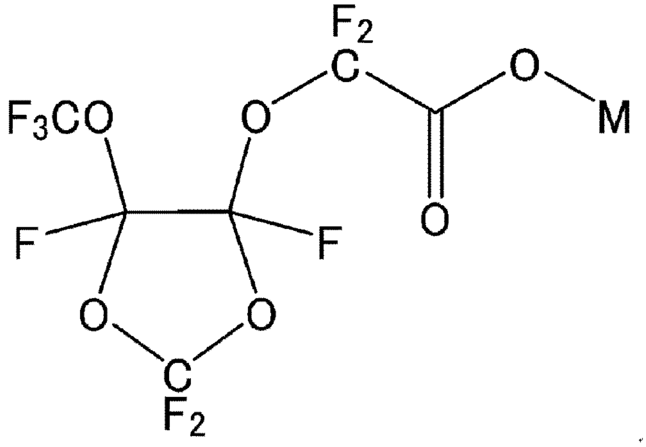

In each formula, M is H, a metal atom, $NR^1_4$, imidazolium optionally containing a substituent, pyridinium optionally containing a substituent, or phosphonium optionally containing a substituent; and $R^1$ is H or an organic group.

The PTFE powder of the disclosure is preferably substantially free from any of the fluorine-containing compounds represented by the above formulas.

In each of the above formulas, M may be H, a metal atom, or $NR^1_4$, may be H, an alkali metal (Group 1), an alkaline earth metal (Group 2), or $NR^1_4$, or may be H, Na, K, Li, or $NH_4$.

$R^1$ may be H or a $C_{1-10}$ organic group, may be H or a $C_{1-4}$ organic group, or may be H or a $C_{1-4}$ alkyl group.

The PTFE powder of the disclosure substantially free from any of the fluorine-containing compounds represented by the above formulas can further reduce or prevent gas generation and deterioration of battery characteristics, and can further improve electrode strength.

The phrase "substantially free from any of the fluorine-containing compounds represented by the above formulas" means that the amount of any of the fluorine-containing compounds is 25 ppb by mass or less in the PTFE powder.

The amount of any of the fluorine-containing compounds is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE powder of the disclosure is also preferably substantially free from a fluorine-containing compound represented by the following formula:

$$[C_{n-1}F_{2n-1}COO^-]M^+$$

wherein n is an integer of 9 to 14, preferably 9 to 12; and
$M^+$ is a cation. Such a PTFE powder can further reduce or prevent gas generation and deterioration of battery characteristics, and can further improve electrode strength.

M constituting the cation $M^+$ in the formula is the same as M mentioned above.

The phrase "substantially free from a fluorine-containing compound represented by the formula" means that the amount of the fluorine-containing compound is 25 ppb by mass or less in the PTFE.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE powder of the disclosure can be produced by, for example, a method including: (A) preparing an aqueous dispersion of PTFE; (B) coagulating the aqueous dispersion to obtain a wet powder of PTFE; and (C) drying the wet powder.

The aqueous dispersion in the step (A) can be produced, for example, by emulsion polymerization.

The emulsion polymerization can be performed by a known method. For example, in the presence of a fluorine-containing anionic surfactant and a polymerization initiator, emulsion polymerization of the monomers necessary to constitute the PTFE is performed in an aqueous medium, whereby an aqueous dispersion containing the PTFE particles (primary particles) can be obtained. In the emulsion polymerization, additives such as a chain transfer agent, a buffer, a pH adjuster, a stabilization aid, a dispersion stabilizer, or a radical scavenger may be used as needed.

Appropriate selection of the conditions for the emulsion polymerization can adjust the SSG within the above range.

The step (A) may be a step of emulsion polymerizing TFE and, if necessary, a modifying monomer.

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the surfactant, and the like may be added in accordance with the purposes.

The polymerization initiator may be any initiator capable of generating radicals within the polymerization temperature range, and any known oil-soluble and/or water-soluble polymerization initiator may be used. Further, the initiator may be combined with a reducing agent, for example, into the form of a redox agent to start polymerization. The concentration of the polymerization initiator is appropriately determined in accordance with the type of the monomer, the target molecular weight of the PTFE, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloro)acyl peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di (perfluorohexanoyl)peroxide, di (perfluoroheptanoyl)peroxide, di (perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-w-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, t-butyl hydroperoxide, and disuccinic acid peroxide. Preferred among these are ammonium persulfate and disuccinic acid peroxide. The initiator may also contain a reducing agent such as a sulfite or a sulfurous acid salt. The amount thereof used may be 0.1 to 20 times the peroxide.

The water-soluble radical polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

In order to easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of the copper salt is copper(II) sulfate and an example of the iron salt is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continually or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium (IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

In use of a redox initiator, the oxidizing agent and the reducing agent may be added at once in an early stage of polymerization, or the reducing agent may be added at once in an early stage of polymerization and the oxidizing agent may be added continuously. Alternatively, the oxidizing agent may be added at once in an early stage of polymerization and the reducing agent may be added continuously, or both the oxidizing agent and the reducing agent may be added continuously.

When one agent of the redox polymerization initiator is added in an early stage of polymerization and the other agent is added continuously, it is preferable to gradually slow down the addition speed in order to obtain PTFE with a low SSG. Moreover, addition is preferably stopped in the middle of polymerization. The addition is preferably stopped before 20% to 40% by mass of the total TFE to be consumed in the polymerization reaction is consumed.

In use of a redox initiator as a polymerization initiator, the amount of the oxidizing agent added is preferably 0.1 ppm or more, more preferably 0.3 ppm or more, still more preferably 0.5 ppm or more, further more preferably 1.0 ppm or more, particularly preferably 5 ppm or more, even more preferably 10 ppm or more, while preferably 10000 ppm or less, more preferably 1000 ppm or less, still more preferably 100 ppm or less, further more preferably 10 ppm or less in the aqueous medium. The amount of the reducing agent added is preferably 0.1 ppm or more, more preferably 1.0 ppm or more, still more preferably 3 ppm or more, further more preferably 5 ppm or more, particularly preferably 10 ppm or more, while preferably 10000 ppm or less, more preferably 1000 ppm or less, still more preferably 100 ppm or less, further more preferably 10 ppm or less.

In use of a redox initiator in the emulsion polymerization, the polymerization temperature is preferably 100°C or lower, more preferably 95°C or lower, still more preferably 90°C or lower, while preferably 10°C or higher, more preferably 20°C or higher, still more preferably 30°C or higher.

In order to achieve improved binding force, improved electrode strength, and improved electrode flexibility, preferred examples of the polymerization initiator preferably include a water-soluble radical polymerization initiator and a redox initiator.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, a decomposer of a polymerization initiator, or a dicarboxylic acid may be used as needed.

In order to adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt.

The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:

$(-CFCF_3-CF_2-O-)_n$,

$(-CF_2-CF_2-CF_2-O-)_n$,

$(-CF_2-CF_2-O-)_n-(-CF_2-O-)_m$,

and

$(-CF_2-CFCF_3-O-)_n-(-CF_2-O-)$.

These structures are disclosed by Kasai in J. Appl. Polymer Sci. 57, 797 (1995). As disclosed in this literature, the PFPE acid or its salt may have a carboxylic acid group or its salt at one end or each end. The PFPE acid or its salt may also have a sulfonic acid or phosphonic acid group or its salt at one end or each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Further more preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or each end may be used in the production method of the disclosure. The PFPE acid or its salt preferably has a number average molecular weight of less than 6000 g/mol.

In order to further increase the molecular weight of PTFE and improve the strength of the electrode mixture sheet, a radical scavenger or a decomposer of a polymerization initiator is preferably added in the emulsion polymerization. The radical scavenger or the decomposer of a polymerization initiator is added after the start of the polymerization reaction, preferably before 10% by mass, preferably 20% by mass of the total TFE to be consumed in the polymerization reaction is polymerized, while preferably before 50% by mass, preferably 40% by mass of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further more preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride ($CuCl_2$).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate ($NH_4SCN$), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes, for example, at least one selected from the group consisting of sulfites, bisulfites, bromates, diimines, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

In order to moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In order to reduce the amount of coagulum produced during polymerization, the emulsion polymerization may be performed in the presence of a dicarboxylic acid in an amount of 5 to 500 ppm, preferably 10 to 200 ppm in the aqueous medium. If the amount of the dicarboxylic acid is too small relative to the aqueous medium, a sufficient effect may not be achieved. Conversely, if the amount is too large, a chain transfer reaction may occur, and the resulting polymer may have a low molecular weight. The amount of the dicarboxylic acid is more preferably 150 ppm or less. The dicarboxylic acid may be added before the start of the polymerization reaction or may be added during the polymerization.

The dicarboxylic acid is preferably one represented by the formula: HOOCRCOOH (wherein R is a C1-C5 alkylene group), more preferably succinic acid, malonic acid, glutaric acid, adipic acid, or pimelic acid, still more preferably succinic acid.

In the emulsion polymerization, the polymerization temperature and the polymerization pressure are appropriately determined in accordance with the type of the monomer used, the target molecular weight of PTFE, and the reaction rate. The polymerization temperature is typically 5°C to 150°C. The polymerization temperature is preferably 10°C or higher, more preferably 30°C or higher, still more preferably 50°C or higher, while more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher, while more preferably 5.0 MPaG or lower, still more preferably 3.0 MPaG or lower.

When VDF is used as a modifying monomer in the emulsion polymerization, in order to easily achieve the above-mentioned physical properties, the VDF concentration in the gas in the reactor at the time of starting polymerization (when adding an initiator) is preferably set to 0.001 mol% or higher, more preferably 0.01 mol% or higher. The VDF concentration may be 15 mol% or lower, preferably 6.0 mol% or lower, still more preferably 5.0 mol% or lower, further more preferably 3.0 mol% or lower, particularly preferably 1.0 mol% or lower. The VDF concentration may be maintained thereafter until the end of the polymerization reaction, or depressurization may be performed during the process. VDF is preferably added all at once before the start of polymerization. Still, a portion thereof may be added continuously or intermittently after the start of polymerization.

When VDF is used as the modifying monomer in the emulsion polymerization, depressurization is preferably not performed until the polymerization is completed after VDF is introduced into the polymerization container. This allows VDF to remain in the system until the end of polymerization, leading to still higher strength of the electrode mixture sheet containing PTFE to be obtained.

When HFP is used as a modifying monomer in the emulsion polymerization, in order to easily achieve the above-mentioned physical properties, the HFP concentration in the gas in the reactor at the time of starting polymerization (when adding an initiator) is preferably set to 0.01 to 3.0 mol%. Further, the HFP concentration in the gas in the reactor at the time when 40% by mass of the total TFE to be consumed in the polymerization reaction is polymerized is preferably higher than 0 mol% and 0.2 mol% or lower. The HFP concentration is preferably maintained thereafter until the end of the polymerization reaction. HFP may be fed all at once before the start of polymerization, or a portion thereof may be fed before the start of polymerization and the rest may be added continuously or intermittently after the start of polymerization. By allowing HFP to remain until the end of the polymerization reaction, the extrusion pressure is reduced even though the electrode mixture sheet containing PTFE to be obtained has high strength.

When HFP is used as a modifying monomer in the emulsion polymerization, in order to achieve further improved strength of the electrode mixture sheet containing PTFE to be obtained, preferably, depressurization is performed before 5% to 40% by mass of the total TFE to be consumed in the polymerization reaction is polymerized, followed by repressurization with TFE alone.

The depressurization is preferably performed such that the pressure inside the reactor is 0.2 MPaG or lower, more preferably 0.1 MPaG or lower, still more preferably 0.05 MPaG or lower. The depressurization is preferably performed such that the pressure inside the reactor is 0.0 MPaG or higher.

The depressurization and the repressurization may be performed multiple times. The depressurization may be performed to a reduced pressure using a vacuum pump.

When CTFE is used as a modifying monomer in the emulsion polymerization, in order to easily achieve the above-mentioned physical properties, the CTFE concentration in the gas in the reactor at the time of starting polymerization (when adding the initiator) is preferably set to 0.001 mol% or higher, more preferably 0.01 mol% or higher. The CTFE concentration is also preferably 3.0 mol% or lower, more preferably 1.0 mol% or lower. The CTFE concentration may be maintained thereafter until the end of the polymerization reaction, or depressurization may be performed during the polymerization reaction. CTFE is preferably added all at once before the start of polymerization. Still, a portion thereof may be added continuously or intermittently after the start of polymerization.

When CTFE is used as a modifying monomer in the emulsion polymerization, depressurization is preferably not performed until the polymerization is completed after the CTFE is introduced into the polymerization container. This allows CTFE to remain in the system until the end of polymerization, leading to still higher strength of the electrode mixture sheet containing PTFE to be obtained.

The coagulation in the step (B) can be performed by a known method.

In the step (C), the drying is typically performed by means such as vacuum, high frequency, or hot air, while the wet powder is kept in a state where it does not flow so much, preferably in a stationary state. Friction between powders, especially at high temperatures generally has an unfavorable effect on fine powder PTFE. This is because particles made of PTFE of this type are easily fibrillated even by a small shearing force to lose their original stable particle structure.

In order to lower the extrusion pressure, the drying temperature is preferably 300°C or lower, more preferably 250°C or lower, still more preferably 230°C or lower, further more preferably 210°C or lower, further more preferably 190°C or lower, particularly preferably 170°C or lower. In order to achieve improved tensile strength at break, the drying temperature is preferably 10°C or higher, more preferably 100°C or higher, still more preferably 150°C or higher, further more preferably 170°C or higher, further more preferably 190°C or higher, particularly preferably 210°C or higher. In order to further increase the strength ratio, the drying temperature is preferably appropriately adjusted within this temperature range.

The step (C) preferably includes placing the wet powder obtained in the step (B) in a container with air permeability on the bottom and/or sides and heating the powder at a temperature of 130°C to 300°C for two hours or longer. Such a heat treatment under extremely limited conditions as described above can efficiently remove the fluorine-containing compound having a molecular weight of 1000 or less together with water, setting the amounts of the fluorine-containing compound and water within the above ranges.

In order to more efficiently remove water and the fluorine-containing compound, the temperature of the heat treatment in the step (C) is preferably 140°C or higher, more preferably 150°C or higher, still more preferably 160°C or higher, further more preferably 180°C or higher, still more preferably 200°C or higher, particularly preferably 220°C or higher, while preferably 280°C or lower, more preferably 250°C or lower.

In order to more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. In order to reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water, preferred are a co-flow box electric furnace, a ventilated box electric furnace, a ventilated conveyor electric furnace, a band electric furnace, a fluidized bed electric furnace, a hot air circulating

electric furnace, and steam furnaces corresponding to the forgoing furnaces (devices of the types determined by replacing the "electric furnace" in the device names of the foregoing electric furnaces with "steam furnace").

In the heat treatment in the step (C), the wet powder is placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 um or less (mesh No. 10 or higher (ASTM)), more preferably 595 um or less (mesh No. 30 or higher), still more preferably 297 um or less (mesh No. 50 or higher), further more preferably 177 um or less (mesh No. 80 or higher), even more preferably 149 um or less (mesh No. 100 or higher), particularly preferably 74 um or less (mesh No. 200 or higher). The opening is preferably 25 um or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher, while preferably 95% or lower.

In order to more efficiently remove water and the fluorine-containing compound, the amount of the wet powder placed in the step (C) is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

In order to more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower relative to the wet powder.

The PTFE powder of the disclosure is used in an electrode binder. In the electrode binder, the PTFE powder of the disclosure may be used alone or mixed with other materials (for example, polymers other than PTFE). Still, the PTFE powder of the disclosure is preferably substantially used alone, more preferably used alone. The expression "the PTFE powder of the disclosure is substantially used alone" means that the PTFE powder is used such that the amount of the PTFE powder in the electrode binder falls within the range described below.

The disclosure also provides an electrode binder consisting essentially of a PTFE powder, the PTFE powder having a standard specific gravity of 2.200 or less and being substantially free from water.

The binder of the disclosure containing a specific PTFE powder can reduce or prevent gas generation inside the battery cell and deterioration of battery characteristics (for example, decrease in capacity during storage at high temperature), and can also improve electrode strength. Since the binder of the disclosure is substantially free from water, the electrode active material to be used together can be selected from a wide range of selections, which is advantageous in terms of the production process. The binder of the disclosure in a powdery form can be mixed with the electrode active material as it is, and there is no need to use organic solvents, which can reduce the process and cost derived from use of organic solvents. Moreover, the binder of the disclosure has excellent binding force to active materials, which can reduce the amount of the binder used.

The PTFE powder in the binder of the disclosure may be the same PTFE powder as the PTFE powder of the disclosure described above, and preferred embodiments are also the same.

The binder of the disclosure consists essentially of the PTFE powder. This allows remarkable exertion of the effect attributable to the PTFE powder. The expression "consists essentially of the PTFE powder" means that the amount of the PTFE powder is 95.0% by mass or more of the binder.

The amount of the PTFE powder is preferably 98.0% by mass or more, more preferably 99.0% by mass or more, still more preferably 99.5% by mass or more, particularly preferably 99.9% by mass or more, most preferably 99.95% by mass or more in the binder.

The binder of the disclosure also preferably consists of the PTFE powder.

Preferably, the binder of the disclosure is substantially free from organic solvents. This can reduce the process and cost derived from use of organic solvents. The expression "substantially free from organic solvents" means that the organic solvent content of the binder is 5% by mass or less.

The organic solvent content is preferably 3% by mass or less, more preferably 1% by mass or less, still more preferably 0.1% by mass or less, further more preferably 0.01% by mass or less, particularly preferably 0.001% by mass or less.

The binder of the disclosure is preferably in a powdery form.

The binder of the disclosure can be suitably used as an electrode binder for secondary batteries such as lithium-ion batteries.

The disclosure also provides an electrode mixture containing the PTFE powder of the disclosure or the electrode

binder of the disclosure, and an electrode active material. Use of the electrode mixture of the disclosure can provide an electrode that can reduce or prevent gas generation inside the battery cell and deterioration of battery characteristics (for example, decrease in capacity during storage at high temperature). Moreover, it can also improve electrode strength. In addition, the electrode active material can be held even when the amount of binder is small.

Examples of the electrode active material include a positive electrode active material and a negative electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides, alkali metal-containing transition metal phosphate compounds, and conductive polymers. Particularly preferred among these as the positive electrode material are alkali metal-containing transition metal composite oxides which produce high voltage. Examples of the alkali metal ions include lithium ions, sodium ions, and potassium ions. In a preferred embodiment, the alkali metal ions may be lithium ions. That is, in this embodiment, the alkali metal ion secondary battery is a lithium-ion secondary battery.

Examples of the alkali metal-containing transition metal composite oxides include lithium-manganese spinel composite oxides represented by the formula:

$$M_aMn_{2-b}M^1_bO_4$$

(wherein M includes at least one metal selected from the group consisting of Li, Na, and K; $0.9 \leq a$; $0 \leq b \leq 1.5$; and $M^1$ includes at least one metal selected from the group consisting of Fe, Co, Ni, Cu, Zn, Al, Sn, Cr, V, Ti, Mg, Ca, Sr, B, Ga, In, Si, and Ge);

lithium-nickel composite oxides represented by the formula:

$$MNi_{1-c}M^2_cO_2$$

(wherein M includes at least one metal selected from the group consisting of Li, Na, and K; $0 \leq c \leq 0.5$; and $M^2$ includes at least one metal selected from the group consisting of Fe, Co, Mn, Cu, Zn, Al, Sn, Cr, V, Ti, Mg, Ca, Sr, B, Ga, In, Si, and Ge); and

lithium-cobalt composite oxides represented by the formula:

$$MCo_{1-d}M^3_dO_2$$

(wherein M includes at least one metal selected from the group consisting of Li, Na, and K; $0 \leq d \leq 0.5$; and $M^3$ includes at least one metal selected from the group consisting of Fe, Ni, Mn, Cu, Zn, Al, Sn, Cr, V, Ti, Mg, Ca, Sr, B, Ga, In, Si, and Ge). In the above formulas, M is preferably a metal selected from the group consisting of Li, Na, and K, more preferably Li or Na, still more preferably Li.

In order to achieve high-energy-density, high-output secondary batteries, preferred among these are $MCoO_2$, $MMnO_2$, $MNiO_2$, $MMn_2O_4$, $MNi_{0.8}Co_{0.15}Al_{0.05}O_2$, and $MNi_{1/3}Co_{1/3}Mn_{1/3}O_2$, and preferred is a compound represented by the following formula (3):

$$MNi_hCo_iMn_jM^5_kO_2 \qquad (3)$$

wherein M includes at least one metal selected from the group consisting of Li, Na, and K; $M^5$ includes at least one selected from the group consisting of Fe, Cu, Zn, Al, Sn, Cr, V, Ti, Mg, Ca, Sr, B, Ga, In, Si, and Ge; and $(h + i + j + k) = 1.0$, $0 \leq h \leq 1.0$, $0 \leq i \leq 1.0$, $0 \leq j \leq 1.5$, and $0 \leq k \leq 0.2$.

Examples of the alkali metal-containing transition metal phosphate compounds include a compound represented by the following formula (4):

$$M_eM^4_f(PO_4)_g \qquad (4)$$

wherein M includes at least one metal selected from the group consisting of Li, Na, and K; $M^4$ includes at least one selected from the group consisting of V, Ti, Cr, Mn, Fe, Co, Ni, and Cu; and $0.5 \leq e \leq 3$, $1 \leq f \leq 2$, and $1 \leq g \leq 3$. In the above formula, M is preferably a metal selected from the group consisting of Li, Na, and K, more preferably Li or Na, still more preferably Li.

The transition metal of the lithium-containing transition metal phosphate compound is preferably V, Ti, Cr, Mn,

Fe, Co, Ni, Cu, or the like. Specific examples thereof include iron phosphates such as $LiFePO_4$, $Li_3Fe_2(PO_4)_3$, and $LiFeP_2O_7$, cobalt phosphates such as $LiCoPO_4$, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Other examples of the positive electrode active material include $MFePO_4$, $MNi_{0.8}Co_{0.2}O_2$, $M_{1.2}Fe_{0.4}Mn_{0.4}O_2$, $MNi_{0.5}Mn_{1.5}O_2$, $MV_3O_6$, and $M_2MnO_3$. In particular, a positive electrode active material such as $M_2MnO_3$ or $MNi_{0.5}Mn_{1.5}O_2$ is preferred because the crystal structure thereof does not collapse even when the secondary battery is operated at a voltage exceeding 4.4 V or at a voltage of 4.6 V or higher. An electrochemical device such as a secondary battery containing a positive electrode material including the positive electrode active material exemplified above is preferred for the following reasons. Namely, it is less likely to have a decrease in remaining capacity or a change in resistance increase rate even after storage at high temperature and the battery performance does not deteriorate even when the device is operated at high voltage.

Other examples of the positive electrode active material include a solid solution material of $M_2MnO_3$ and $MM^6O_2$ (wherein M includes at least one metal selected from the group consisting of Li, Na, and K; and $M^6$ is a transition metal such as Co, Ni, Mn, or Fe).

The solid solution material is, for example, an alkali metal manganese oxide represented by the formula $Mx[Mn_{(1-y)}M^7{}_y]O_z$. In the formula, M includes at least one metal selected from the group consisting of Li, Na, and K; and $M^7$ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of $1 < x < 2$, $0 \leq y < 1$, and $1.5 < z < 3$, respectively. In particular, a manganese-containing solid solution material in which $LiNiO_2$ or $LiCoO_2$ is dissolved in a $Li_2MnO_3$ base such as $Li_{1.2}Mn_{0.5}Co_{0.14}Ni_{0.14}O_2$ is preferred because it can provide an alkali metal ion secondary battery with high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

Examples of the conductive polymers include p-doped conductive polymers and n-doped conductive polymers. Examples of the conductive polymers include polyacetylene-based polymers, polyphenylene-based polymers, heterocyclic polymers, ionic polymers, ladder-shaped polymers, and network polymers.

To a surface of the positive electrode active material may be attached a substance having a composition different from the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the materials. In the case of attaching carbon, for example, a carbonaceous material in the form of activated carbon may be mechanically attached to the surface afterward.

For the amount of the substance attached to the surface in terms of the mass relative to the amount of the positive electrode active material, the lower limit thereof is preferably 0.1 ppm or more, more preferably 1 ppm or more, still more preferably 10 ppm or more, while the upper limit thereof is preferably 20% or less, more preferably 10% or less, still more preferably 5% or less. The substance attached to the surface can reduce oxidation of the electrolyte solution on the surface of the positive electrode active material, improving the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably 0.5 $g/cm^3$ or higher, more preferably 0.8 $g/cm^3$ or higher, still more preferably 1.0 $g/cm^3$ or higher. The positive electrode active material having a tap density

below the lower limit may cause an increased amount of a dispersion medium required and increased amounts of a conductive material and a binder required in formation of the positive electrode active material layer, as well as limitation on the packing fraction of the positive electrode active material in the positive electrode active material layer, resulting in limitation on the battery capacity. A complex oxide powder having a high tap density enables formation of a positive electrode active material layer with a high density. The tap density is preferably as high as possible and has no upper limit, in general. Still, too high a tap density may cause diffusion of lithium ions in the positive electrode active material layer with the electrolyte solution serving as a diffusion medium to function as a rate-determining step, easily impairing the load characteristics. Thus, the upper limit of the tap density is preferably 4.0 g/$cm^3$ or lower, more preferably 3.7 g/$cm^3$ or lower, still more preferably 3.5 g/$cm^3$ or lower.

The tap density is determined as a powder packing density (tap density) g/$cm^3$ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 um or greater, more preferably 0.5 um or greater, still more preferably 0.8 um or greater, most preferably 1.0 um or greater, while preferably 30 um or smaller, more preferably 27 um or smaller, still more preferably 25 um or smaller, most preferably 22 um or smaller. The particles having a median size below the lower limit may fail to provide a product with a high tap density. The particles having a median size greater than the upper limit may cause prolonged diffusion of lithium in the particles, impairing the battery performance and generating streaks in formation of the positive electrode for a battery, i.e., when the active material and components such as a conductive material and a binder are formed into slurry by adding a solvent and the slurry is applied in the form of a film, for example. Mixing two or more positive electrode active materials having different median sizes d50 can further improve the easiness of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass sodium hexametaphosphate aqueous solution and the measurement refractive index is set to 1.24 after 5-minute ultrasonic dispersion.

When the primary particles agglomerate to form secondary particles, the average primary particle size of the positive electrode active material is preferably 0.05 um or greater, more preferably 0.1 um or greater, still more preferably 0.2 um or greater. The upper limit thereof is preferably 5 um or smaller, more preferably 4 um or smaller, still more preferably 3 um or smaller, most preferably 2 um or smaller. The primary particles having an average primary particle size greater than the upper limit may have difficulty in forming spherical secondary particles, adversely affecting the powder packing. Further, such primary particles may have a greatly reduced specific surface area, highly possibly impairing the battery performance such as output characteristics. In contrast, the primary particles having an average primary particle size below the lower limit may usually be insufficiently grown crystals, causing poor charge and discharge reversibility, for example.

The primary particle size is measured by scanning electron microscopic (SEM) observation. Specifically, the primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the primary particle size.

The positive electrode active material has a BET specific surface area of preferably 0.1 $m^2$/g or larger, more preferably 0.2 $m^2$/g or larger, still more preferably 0.3 $m^2$/g or larger. The upper limit thereof is preferably 50 $m^2$/g or smaller, more preferably 40 $m^2$/g or smaller, still more preferably 30 $m^2$/g or smaller. The positive electrode active material having a BET specific surface area smaller than the above range may easily impair the battery performance. The positive electrode active material having a BET specific surface area larger than the above range may less easily have an increased tap density, easily causing a difficulty in applying the material in formation of the positive electrode active material layer.

The BET specific surface area is defined by a value determined by single point BET nitrogen adsorption utilizing a gas flow method using a surface area analyzer (e.g., fully automatic surface area measurement device, Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

When the secondary battery of the disclosure is used as a large-size lithium-ion secondary battery for hybrid vehicles or distributed generation, it needs to achieve high output. Thus, the particles of the positive electrode active material are preferably mainly composed of secondary particles. The particles of the positive electrode active material preferably include 0.5 to 7.0% by volume of fine particles having an average secondary particle size of 40 um or smaller and having an average primary particle size of 1 um or smaller. The presence of fine particles having an average primary particle size of 1 um or smaller enlarges the contact area with the electrolyte solution and enables more rapid diffusion of lithium ions between the electrode mixture and the electrolyte solution, improving the output performance of the battery.

The positive electrode active material may be produced by any usual method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, $Li_2CO_3$, or $LiNO_3$ is added thereto and the mixture is sintered at high temperature, thereby providing an active material.

In production of the positive electrode, one of the aforementioned positive electrode active materials may be used alone or two or more thereof having different compositions may be used in any combination at any ratio. Preferred examples of the combination in this case include a combination of $LiCoO_2$ with a ternary system such as $LiNi_{0.33}Co_{0.33}Mn_{0.33}O_2$, a combination of $LiCoO_2$ with either $LiMn_2O_4$ or $LiMn_2O_4$ in which one or more Mn atoms are replaced by a different transition metal, and a combination of $LiFePO_4$ with either $LiCoO_2$ or $LiCoO_2$ in which one or more Co atoms are replaced by a different transition metal.

In order to achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may cause an insufficient electric capacity. In contrast, too large an amount thereof may cause insufficient strength of the positive electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and $Li_4Ti_5O_{12}$, or a mixture of two or more of these. Among these, a material containing a carbonaceous material at least in a part or a silicon-containing compound can be particularly suitably used.

The negative electrode active material used in the disclosure preferably contains silicon as a constituent element. Use of a negative electrode active material containing silicon as a constituent element enables production of a high-capacity battery.

Preferred materials containing silicon include silicon particles, particles having a structure in which fine silicon particles are dispersed in a silicon-based compound, silicon oxide particles represented by the formula SiOx ($0.5 \leq x \leq 1.6$), and mixtures of these. Use of any of these provides a negative electrode mixture for lithium-ion secondary batteries with higher initial charge/discharge efficiency, high capacity, and excellent cycle characteristics.

Silicon oxide in the disclosure is a general term for amorphous silicon oxide, and silicon oxide before disproportionation is represented by the formula SiOx ($0.5 \leq x \leq 1.6$). In the formula, x preferably satisfies $0.8 \leq x < 1.6$, more preferably $0.8 \leq x < 1.3$. This silicon oxide can be obtained, for example, by cooling and precipitating silicon monoxide gas produced by heating a mixture of silicon dioxide and metal silicon.

Particles having a structure in which fine silicon particles are dispersed in a silicon-based compound can be obtained by, for example, a method including sintering a mixture of fine silicon particles with a silicon-based compound, or by heating silicon oxide particles before disproportionation represented by the formula SiOx at a temperature of 400°C or higher, suitably at 800°C to 1100°C in an inert, non-oxidizing atmosphere such as an argon atmosphere to perform a disproportionation reaction. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in amorphous silicon oxide can be confirmed using a transmission electron microscope.

The physical properties of the silicon-containing particles can be appropriately determined in accordance with the target composite particles. For example, the average particle size is preferably 0.1 to 50 um. The lower limit is more preferably 0.2 um or greater, still more preferably 0.5 um or greater. The upper limit is more preferably 30 um or smaller, still more preferably 20 um or smaller. The average particle size is expressed as a weight average particle size determined by particle size distribution measurement by a laser diffraction method.

The BET specific surface area is preferably 0.5 to 100 $m^2/g$, more preferably 1 to 20 $m^2/g$. A BET specific surface area of 0.5 $m^2/g$ or more can eliminate the risk of battery characteristics impairment resulting from reduced adhesion of the negative electrode active material upon application to the electrode. A BET specific surface area of 100 $m^2/g$ or less can increase the proportion of silicon dioxide on the particle surface, which eliminates the risk of battery capacity reduction upon use of the silicon fine particles as a negative electrode material for a lithium-ion secondary battery.

Coating the silicon-containing particles with carbon imparts conductivity, thereby improving battery characteristics. Examples of methods for imparting conductivity include mixing the silicon-containing particles with conductive

particles such as graphite particles, coating the surfaces of the silicon-containing particles with carbon films, and a combination of both. Preferred is a method of coating the silicon-containing particles with carbon films, and more preferred is a method of chemical vapor deposition (CVD).

In order to increase the capacity of the resulting electrode mixture, the amount of the negative electrode active material in the electrode mixture is preferably 40% by mass or more, more preferably 50% by mass or more, particularly preferably 60% by mass or more. The upper limit is preferably 99% by mass or less, more preferably 98% by mass or less.

The electrode mixture of the disclosure preferably further contains a conductive aid.

Any known conductive material can be used as the conductive aid. Specific examples include metal materials such as copper and nickel, and carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these materials may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount less than the above range may cause insufficient conductivity. In contrast, the conductive aid in an amount more than the above range may cause a low battery capacity.

The electrode mixture of the disclosure may further contain a thermoplastic resin. Examples of thermoplastic resins include polyvinylidene fluoride, polypropylene, polyethylene, polystyrene, polyethylene terephthalate, and polyethylene oxide. One thermoplastic resin may be used alone, or two or more thermoplastic resins may be used in any combination at any ratio.

The proportion of the thermoplastic resin relative to the electrode active material is usually 0.01% by mass or more, preferably 0.05% by mass or more, more preferably 0.10% by mass or more, while usually 3.0% by mass or less, preferably 2.5% by mass or less, more preferably 2.0% by mass or less. Addition of a thermoplastic resin can improve the mechanical strength of the electrode. The thermoplastic resin at a proportion higher than the above range may lower the proportion of the electrode active material in the electrode mixture, resulting in a low capacity of the battery and high resistance between the active materials.

The amount of the binder in the electrode mixture of the disclosure may be 0.1% by mass or more, preferably 0.2% by mass or more, more preferably 0.5% by mass or more relative to the electrode mixture. The amount may be 50% by mass or less, preferably 40% by mass or less, more preferably 30% by mass or less, further more preferably 10% by mass or less, particularly preferably 5% by mass or less, most preferably 3% by mass or less relative to the electrode mixture. Too low a proportion of the binder may fail to sufficiently hold the electrode mixture active material and cause insufficient mechanical strength of the electrode mixture sheet, impairing the battery performance such as cycle characteristics. Too high a proportion of the binder may lead to a decrease in battery capacity and conductivity. Since the binder of the disclosure has excellent binding force, the electrode active material can be sufficiently held even when the binder content is small.

In the electrode mixture of the disclosure, the binder component preferably consists essentially of the PTFE powder, more preferably consists of the PTFE powder. The phrase "the binder component consists essentially of the PTFE powder" means that the amount of the PTFE powder in the binder component constituting the electrode mixture is 95.0% by mass or more in the binder component. The amount of the PTFE powder is preferably 98.0% by mass or more, more preferably 99.0% by mass or more, still more preferably 99.5% by mass or more, particularly preferably 99.9% by mass or more, most preferably 99.95% by mass or more in the binder component.

The electrode mixture of the disclosure is preferably in the form of sheet.

The electrode mixture of the disclosure can suitably be used as an electrode mixture for a secondary battery. In particular, the electrode mixture of the disclosure is suitable for a lithium-ion secondary battery. The electrode mixture of the disclosure, when used for a secondary battery, is commonly used in the form of sheet.

An exemplary specific method of producing an electrode mixture sheet containing an electrode mixture is described below. The electrode mixture sheet can be obtained by a production method including: (1) mixing a raw material composition containing an electrode active material, a binder, and, if necessary, a conductive aid; (2) molding the raw material composition obtained in the step (1) into a bulky shape; and (3) rolling the bulky raw material composition obtained in the step (2) into a sheet.

The raw material composition mixed in the step (1) is in a state where materials such as the electrode active material and the binder, etc. are simply mixed and does not have a fixed shape. Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, or a planetary mixer.

For the binder mixing conditions in the step (1), the number of rotations is preferably 1000 rpm or less. The number of rotations is preferably 10 rpm or more, more preferably 15 rpm or more, still more preferably 20 rpm or more, while preferably 900 rpm or less, more preferably 800 rpm or less, still more preferably 700 rpm or less. At the number

of rotations below this range, mixing may take a long time, affecting the productivity. At the number of rotations above this range, fibrillation may occur excessively, resulting in an electrode mixture sheet having poor strength and poor flexibility.

Forming into a bulky raw material composition in the step (2) means forming the raw material composition into a single mass. Specific examples of methods of forming into a bulky shape include extrusion molding and press molding. The term "bulky" does not specify the shape and means any state of single mass, including a rod shape, a sheet shape, a spherical shape, a cubic shape, and the like.

A specific example of the rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. As described, better flexibility is achieved not by thinning the rolled sheet in one time but by rolling the sheet in steps. The number of performing the step (4) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

In order to control the fibrillation size, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), or may be repeated. In any of the steps (2), (3), (4), and (5), uniaxial stretching or biaxial stretching may be performed. The fibrillation size can also be adjusted in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky raw material composition or may be a sheet-shaped raw material composition. The thickness of a sample refers to the thickness in the direction along which a load is applied during rolling.

The electrode mixture sheet can be suitably produced also by a production method including:

(a) mixing a powdery component and a binder to provide an electrode mixture; and
(b) calendaring or extrusion-molding the electrode mixture into a sheet,

the mixing in the step (a) including: (a1) homogenizing the powdery component and the binder into powder; and (a2) mixing the material powder obtained in the step (a1) to provide the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Accordingly, the homogenizing in the step (a1) is preferably performed at 19°C or lower, preferably at a temperature of 0°C to 19°C.

In other words, such a step (a1) is preferably performed such that the materials are mixed and thereby homogenized while reducing fibrillation.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 80°C.

In an embodiment, the calendering or extrusion molding in the step (b) is performed at a temperature of 30°C to 150°C, preferably 35°C to 120°C, more preferably 40°C to 100°C.

The mixing in the step (a) is preferably performed with shearing force applied.

Specific examples of mixing methods include mixing with the use of a W-shaped mixer, a V-shaped mixer, a

drum mixer, a ribbon mixer, a conical screw mixer, a single screw kneader, a twin-screw kneader, a mix muller, a stirring mixer, a planetary mixer, a Henschel mixer, or a rapid mixer.

For the mixing conditions, the number of rotations and the mixing duration are set as appropriate. For example, the number of rotations is suitably 15000 rpm or less, preferably 10 rpm or more, more preferably 1000 rpm or more, still more preferably 3000 rpm or more, while preferably 12000 rpm or less, more preferably 11000 rpm or less, still more preferably 10000 rpm or less. At the number of rotations below this range, mixing may take a long time, affecting the productivity. At the number of rotations above this range, fibrillation may occur excessively, resulting in an electrode mixture sheet having poor strength.

The step (a1) is preferably performed at a weaker shearing force than that in the step (a2).

In the step (a2), the raw material composition preferably contains no liquid solvent, but a small amount of lubricant may be used. In other words, the powdery raw material mixture obtained in the step (a1) may be combined with a lubricant, whereby paste may be prepared.

Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).

The lubricant has a water content of preferably 1000 ppm or less.

A water content of 1000 ppm or less is preferred to reduce deterioration of the electrochemical device. The water content is more preferably 500 ppm or less.

The lubricant, when used, is particularly preferably a low polar solvent such as heptane or xylene or an ionic liquid.

The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).

The raw material composition preferably contains substantially no liquid solvent. In a conventional method for producing an electrode mixture, typically, a solvent containing a binder dissolved therein is used to prepare slurry containing an electrode mixture component in the form of powder dispersed therein, and the slurry is applied and dried to produce an electrode mixture sheet. In this case, a solvent to dissolve a binder is used. Still, a solvent that can dissolve a binder resin commonly used in conventional cases is limited to specific solvents such as butyl butyrate. These solvents react with a solid electrolyte to deteriorate the solid electrolyte and may cause poor battery performance. In addition, low polar solvents such as heptane can dissolve very limited types of binder resin and have a low flash point, which may cause a difficulty in handling.

Not using a solvent but using a powdery binder containing less water in forming an electrode mixture sheet can provide a battery in which the solid electrolyte is less likely to be impaired. The above production method can provide an electrode mixture sheet containing a binder having a fine fibrous structure and can reduce a burden on the production process owing to elimination of slurry production.

The step (b) includes calendering or extrusion. The calendering and extrusion can be performed by known methods. Thereby, the material can be formed into the shape of an electrode mixture sheet.

The step (b) preferably includes (b1) forming the electrode mixture obtained in the step (a) into a bulky electrode mixture and (b2) calendering or extrusion-molding the bulky electrode mixture.

Forming into a bulky electrode mixture means forming the electrode mixture into a single mass.

Specific examples of methods of forming into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 um or greater, more preferably 20000 um or greater.

A specific example of the calendering or extrusion molding in the step (b2) is a method of rolling the electrode mixture using a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) may be preferably followed by a step (c) of applying a larger load on the resulting rolled sheet to form a thinner sheet-shaped product. Repeating the step (c) is also preferred. As described, better flexibility is achieved not by thinning the rolled sheet in one time but by rolling the sheet in steps.

The number of performing the step (c) is preferably twice or more and 10 times or less, more preferably three times or more and nine times or less.

A specific example of a rolling method is a method of rotating two or a plurality of rollers and passing the rolled sheet therebetween to provide a thinner sheet-shaped product.

In order to control the sheet strength, the step (b) or the step (c) is also preferably followed by a step (d) of coarsely crushing the rolled sheet, again forming the coarsely crushed product into a bulky product, and then rolling the

bulky product into a sheet-shaped product. Repeating the step (d) is also preferred. The number of performing the step (d) is preferably once or more and 12 times or less, more preferably twice or more and 11 times or less.

Specific examples of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The term "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), or may be repeated.

In any of the steps (a), (b), (c), and (d), uniaxial stretching or biaxial stretching may be performed.

The sheet strength can also be adjusted in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher, while preferably 150°C or lower.

The electrode mixture sheet may be used as an electrode mixture sheet for a secondary battery and may be for either a negative electrode or a positive electrode. In particular, the electrode mixture sheet is suitable for a lithium-ion secondary battery.

The disclosure also provides an electrode including the PTFE powder of the disclosure or the electrode binder of the disclosure, an electrode active material, and a current collector. The electrode of the disclosure can reduce or prevent gas generation inside the battery cell and deterioration of battery characteristics (for example, decrease in capacity during storage at high temperature). The electrode of the disclosure also has excellent strength.

The electrode of the disclosure may contain the aforementioned electrode mixture of the disclosure (preferably the electrode mixture sheet) and a current collector.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 um or greater, preferably 3 um or greater, more preferably 5 um or greater, while usually 1 mm or smaller, preferably 100 um or smaller, more preferably 50 um or smaller. The metal foil having a thickness smaller than the above range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The ratio between the thicknesses of the current collector and the positive electrode mixture may be any value, and the ratio {(thickness of positive electrode mixture on one side immediately before injection of electrolyte solution)/(thickness of current collector)} is preferably 20 or lower, more preferably 15 or lower, most preferably 10 or lower. The ratio is also preferably 0.5 or higher, more preferably 0.8 or higher, most preferably 1 or higher. The current collector and the positive electrode mixture showing a ratio higher than the above range may cause the current collector to generate heat due to Joule heating during high-current-density charge and discharge. The current collector and the positive electrode mixture showing a ratio lower than the above range may cause an increased ratio by volume of the current collector to the positive electrode active material, reducing the battery capacity.

The positive electrode may be produced by a usual method. In an exemplary method, the electrode mixture sheet and the current collector are laminated via an adhesive, followed by vacuum drying.

The density of the positive electrode mixture sheet is preferably 3.00 g/cm$^3$ or higher, more preferably 3.10 g/cm$^3$ or higher, still more preferably 3.20 g/cm$^3$ or higher, while preferably 3.80 g/cm$^3$ or lower, more preferably 3.75

$g/cm^3$ or lower, still more preferably 3.70 $g/cm^3$ or lower. The positive electrode mixture sheet having a density higher than the above range may cause low permeability of the electrolyte solution toward the vicinity of the interface between the current collector and the active material, and poor charge and discharge characteristics particularly at a high current density, failing to provide high output. The positive electrode mixture sheet having a density lower than the above range may cause poor conductivity between the active materials and increase the battery resistance, failing to provide high output.

In order to improve the stability at high output and high temperature, the area of the positive electrode mixture sheet is preferably large relative to the outer surface area of an external case of the battery. Specifically, the total area of the positive electrode mixture is preferably 15 times or more, more preferably 40 times or more, greater than the surface area of the external case of the secondary battery. For closed, square-shaped cases, the outer surface area of an external case of the battery herein means the total area calculated from the dimensions including length, width, and thickness of the case portion into which a power-generating element is packed except for a protruding portion of a terminal. For closed, cylinder-like cases, the outer surface area of an external case of the battery herein means the geometric surface area of an approximated cylinder of the case portion into which a power-generating element is packed except for a protruding portion of a terminal. The total area of the positive electrode mixture herein means the geometric surface area of the positive electrode mixture layer opposite to a mixture layer including the negative electrode active material. For structures including a current collector foil and positive electrode mixture layers on both sides of the current collector, the total area of the positive electrode is the sum of the areas calculated on the respective sides.

The positive electrode may have any thickness. In order to achieve a high capacity and high output, the lower limit of the thickness of the mixture layer on one side of the current collector excluding the thickness of the metal foil of the current collector is preferably 10 um or greater, more preferably 20 um or greater, while preferably 500 um or smaller, more preferably 450 um or smaller.

To a surface of the positive electrode may be attached a substance having a composition different from the positive electrode. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 um or greater, preferably 3 um or greater, more preferably 5 um or greater, while usually 1 mm or smaller, preferably 100 um or smaller, more preferably 50 um or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.3 $g/cm^3$ or higher, more preferably 1.4 $g/cm^3$ or higher, still more preferably 1.5 $g/cm^3$ or higher, while preferably 2.0 $g/cm^3$ or lower, more preferably 1.9 $g/cm^3$ or lower, still more preferably 1.8 $g/cm^3$ or lower. The negative electrode mixture having a density higher than the above range may cause low permeability of the electrolyte solution toward the vicinity of the interface between the current collector and the active material, and poor charge and discharge characteristics particularly at a high current density, failing to provide high output. The negative electrode mixture having a density lower than the above range may cause poor conductivity between the active materials and increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 um or greater, more preferably 20 um or greater, while preferably 500 um or smaller, more preferably 450 um or smaller.

The disclosure also provides a secondary battery including the aforementioned electrode of the disclosure.

The secondary battery of the disclosure may be a secondary battery obtainable by use of an electrolyte solution or may be a solid-state secondary battery.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The nonaqueous electrolyte solution used may be a solution obtained by dissolving a known electrolyte salt in a known organic solvent for dissolving an electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include $LiClO_4$, $LiAsF_6$, $LiBF_4$, $LiPF_6$, $LiN(SO_2CF_3)_2$, and $LiN(SO_2C_2F_5)_2$. In order to achieve favorable cycle characteristics, particularly preferred is $LiPF_6$, $LiBF_4$, $LiN(SO_2CF_3)_2$, $LiN(SO_2C_2F_5)_2$, and a combination of any of these.

The concentration of the electrolyte salt is preferably 0.8 mol/L or higher, more preferably 1.0 mol/L or higher. The upper limit is usually 1.5 mol/L, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric which is formed from a material stable to the electrolyte solution, such as resin, glass fiber, or inorganic matter, and which has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or a nonwoven fabric formed from a polyolefin such as polyethylene or polypropylene.

The separator may have any thickness, and the thickness is usually 1 um or greater, preferably 5 um or greater, more preferably 8 um or greater, while usually 50 um or smaller, preferably 40 um or smaller, more preferably 30 um or smaller. The separator thinner than the above range may have poor insulation and mechanical strength. The separator thicker than the above range may cause not only poor battery performance such as poor rate characteristics but also a low energy density of the whole electrolyte battery.

The separator which is a porous one such as a porous sheet or a nonwoven fabric may have any porosity. The porosity is usually 20% or higher, preferably 35% or higher, more preferably 45% or higher, while usually 90% or lower, preferably 85% or lower, more preferably 75% or lower. The separator having a porosity lower than the above range tends to have high film resistance, causing poor rate characteristics. The separator having a porosity higher than the above range tends to have low mechanical strength, causing poor insulation.

The separator may also have any average pore size. The average pore size is usually 0.5 um or smaller, preferably 0.2 um or smaller, while usually 0.05 um or larger. The separator having an average pore size larger than the above range may easily cause short circuits. The separator having an average pore size smaller than the above range may have high film resistance, causing poor rate characteristics.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 μm and a thickness of 5 to 50 um. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of smaller than 1 μm may be applied to the respective surfaces of the positive electrode with fluororesin used as a binder to form a porous layer.

The electrode mixture group may be either a laminate structure including the above positive and negative electrodes with the above separator in between, or a wound structure including the above positive and negative electrodes in spiral with the above separator in between. The proportion of the volume of the electrode mixture group in the battery internal volume (hereinafter, referred to as an electrode mixture group proportion) is usually 40% or higher, preferably 50% or higher, while usually 90% or lower, preferably 80% or lower.

The electrode mixture group proportion lower than the above range may cause a low battery capacity. The electrode mixture group proportion higher than the above range may cause small void space in the battery. Thus, if the battery temperature rises to high temperature and thereby the components swell and the liquid fraction of the electrolyte solution exhibits high vapor pressure to raise the internal pressure, the battery characteristics such as charge and discharge repeatability and high-temperature storageability may be impaired and a gas-releasing valve for releasing the internal pressure toward the outside may be actuated.

The current collecting structure may be any structure. In order to more effectively improve the high-current-density charge and discharge performance by the electrolyte solution, the current collecting structure is preferably a

structure which reduces the resistances at wiring portions and jointing portions. Such reduction in internal resistance can particularly favorably lead to the effects achieved with the electrolyte solution.

In an electrode mixture group having the laminate structure, the metal core portions of the respective electrode mixture layers are preferably bundled and welded to a terminal. If an electrode mixture has a large area, the internal resistance is high. Thus, multiple terminals may preferably be disposed in the electrode mixture so as to reduce the resistance. In an electrode mixture group having the wound structure, multiple lead structures may be disposed on each of the positive electrode and the negative electrode and bundled to a terminal. This can reduce the internal resistance.

The external case may be made of any material that is stable to an electrolyte solution to be used. Specific examples thereof include metals such as nickel-plated steel plates, stainless steel, aluminum and aluminum alloys, and magnesium alloys, and a layered film (laminate film) of resin and aluminum foil. In order to reduce the weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin which is different from the resin of the laminate film may be disposed between the resin layers. Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The lithium-ion secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based all-solid-state secondary battery.

The solid-state secondary battery preferably includes a positive electrode, a negative electrode, and a solid electrolyte layer between the positive electrode and the negative electrode.

The solid electrolyte used in a solid-state secondary battery mixture may be a sulfide-based solid electrolyte or an oxide-based solid electrolyte. In particular, when a sulfide-based solid electrolyte is used, the solid-state secondary battery mixture is advantageously flexible.

The sulfide-based solid electrolyte is not limited. The sulfide-based solid electrolyte used may be any one selected from $Li_2S$-$P_2S_5$, $Li_2S$-$P_2S_3$, $Li_2S$-$P_2S_3$-$P_2S_5$, $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, LiI-$Li_2S$-$SiS_2$-$P_2S_5$, $Li_2S$-$SiS_2$-$Li_4SiO_4$, $Li_2S$-$SiS_2$-$Li_3PO_4$, $Li_3PS_4$-$Li_4GeS_4$, $Li_{3.4}P_{0.6}Si_{0.4}S_4$, $Li_{3.25}P_{0.25}Ge_{0.76}S_4$, $Li_{4-x}Ge_{2-x}P_xS_4$ (X = 0.6 to 0.8), $Li_{4+y}Ge_{1-y}Ga_yS_4$ (y = 0.2 to 0.3), LiPSCl, LiCl, $Li_{7-x-2y}PS_{6-x-y}Cl_x$ ($0.8 \le x \le 1.7$, $0 < y \le -0.25x + 0.5$), or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (O), has conductivity of metal ions belonging to Group 1 or Group 2 of the periodic table, and has electronic insulating properties.

Specific examples of the compound include $Li_{xa}La_{ya}TiO_3$ (xa = 0.3 to 0.7, ya = 0.3 to 0.7) (LLT), $Li_{xb}La_{yb}Zr_{zb}$-$M^{bb}_{mb}O_{nb}$ (wherein $M^{bb}$ includes at least one element selected from Al, Mg, Ca, Sr, V, Nb, Ta, Ti, Ge, In, and Sn; xb satisfies $5 \le xb \le 10$; yb satisfies $1 \le yb \le 4$; zb satisfies $1 \le zb \le 4$; mb satisfies $0 \le mb \le 2$; and nb satisfies $5 \le nb \le 20$), $Li_{xc}B_{yc}M^{cc}_{zc}O_{nc}$ (wherein $M^{cc}$ includes at least one element selected from C, S, Al, Si, Ga, Ge, In, and Sn; xc satisfies $0 \le xc \le 5$; yc satisfies $0 \le yc \le 1$; zc satisfies $0 \le zc \le 1$; and nc satisfies $0 \le nc \le 6$), $Li_{xd}(Al,Ga)_{yd}(Ti,Ge)_{zd}Si_{ad}P_{md}O_{nd}$ ($1 \le xd \le 3$, $0 \le yd \le 2$, $0 \le zd \le 2$, $0 \le ad \le 2$, $1 \le md \le 7$, and $3 \le nd \le 15$), $Li_{(3-2xe)}M^{ee}_{xe}D^{ee}O$ (wherein xe is a number of 0 or greater and 0.1 or smaller, $M^{ee}$ is a divalent metal atom, $D^{ee}$ is a halogen atom or a combination of two or more halogen atoms), $Li_{xf}Si_{yf}O_{zf}$ ($1 \le xf \le 5$, $0 < yf \le 3$, and $1 \le zf \le 10$), $Li_{xg}S_{yg}O_{zg}$ ($1 \le xg \le 3$, $0 < yg \le 2$, and $1 \le zg \le 10$), $Li_3BO_3$-$Li_2SO_4$, $Li_2O$-$B_2O_3$-$P_2O_5$, $Li_2O$-$SiO_2$, $Li_3BaLa_2Ta_2O_{12}$, $Li_3PO_{(4-3/2w)}N_w$ (w < 1), $Li_{3.5}Zn_{0.25}GeO_4$ having a lithium super ionic conductor (LISICON) crystal structure, $La_{0.5},Li_{0.34}TiO_{2.94}$ having a perovskite crystal structure, $La_{0.55}Li_{0.35}TiO_3$, $LiTi_2P_3O_2$ having a natrium super ionic conductor (NASICON) crystal structure, $Li_{1+xh+yh}(Al,Ga)_{xh}(Ti,Ge)_{2-xh}Si_{yh}P_{3-yh}O_{12}$ ($0 \le xh \le 1$ and $0 \le yh \le 1$), and $Li_7La_3Zr_2O_{12}$ (LLZ) having a garnet crystal structure. Ceramic materials in which element substitution is performed for LLZ are also known. Examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and O are also desirable. Examples include lithium phosphate ($Li_3PO_4$), LiPON in which one or more oxygen atoms in lithium phosphate are replaced with nitrogen, and $LiPOD^1$ (wherein $D^1$ includes at least one selected from Ti, V, Cr, Mn, Fe, Co, Ni, Cu, Zr, Nb, Mo, Ru, Ag, Ta, W, Pt, Au, and the like). $LiA^1ON$ (wherein $A^1$ includes at least one selected from Si, B, Ge, Al, C, Ga, and the like) can also be preferably used. Specific examples

include $Li_2O$-$Al_2O_3$-$SiO_2$-$P_2O_5$-$TiO_2$-$GeO_2$ and $Li_2O$-$Al_2O_3$-$SiO_2$-$P_2O_5$-$TiO_2$.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type ($La_{0.5}$,$Li_{0.34}TiO_{2.94}$ etc.), NASICON type ($Li_{1.3}Al_{0.3}Ti_{1.7}(PO_4)_3$etc.), or garnet type ($Li_7La_3Zr_2O_{12}$ (LLZ) etc.). Preferred among these is the NASICON type.

The volume average particle size of the oxide solid electrolyte is not limited. Still, the volume average particle size is preferably 0.01 um or greater, more preferably 0.03 um or greater. The upper limit is preferably 100 um or smaller, more preferably 50 um or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data was acquired from this dispersion sample 50 times using a quartz cell for measurement at a temperature of 25°C with a laser diffraction/scattering particle size distribution analyzer LA-920 (HORIBA), and the volume average particle size was determined. For other detailed conditions and the like, JIS Z8828:2013 "Particle size analysis - Dynamic light scattering" is referred as necessary. Five samples are prepared for each level and the average value is used.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

## EXAMPLES

The disclosure is more specifically described hereinbelow with reference to examples, but the disclosure is not limited to these examples.

Various physical properties were measured by the following methods.

### Average primary particle size

A PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

### Apparent density

The apparent density was measured in conformity with JIS K6892.

### Average secondary particle size

The average secondary particle size was measured in conformity with JIS K6891.

### Standard specific gravity (SSG)

The SSG was determined by the water displacement method in conformity with ASTM D792 using a sample molded in conformity with ASTM D4895.

### Amount of PMVE

PTFE powder was melted at 370°C, and $^{19}F$-NMR measurement was performed thereon. The amount of PMVE

was calculated based on the obtained signals derived from functional groups using the following equation.

$$\text{PMVE content (\% by mass)} = (664B/(300A + 364B)) \times 100$$

(A: Total integral value of the $CF_2$ signal appearing at around -120 ppm and the CF signal appearing at around -136 ppm, B: Integral value of the PMVE-derived $CF_3$ signal appearing at around -54 ppm)

The chemical shift value used was obtained with the peak top of the $CF_2$ signal derived from the polymer main chain at -120 ppm.

CTFE content

PTFE powder was press-molded into a thin-film disc and the thin-film disc was subjected to FT-IR measurement, so that infrared absorbances were obtained. The CTFE content was determined by multiplying the ratio (absorbance at 957 $cm^{-1}$)/(absorbance at 2360 $cm^{-1}$) by 0.58.

HFP content

PTFE powder was press-molded into a thin-film disc and the thin-film disc was subjected to FT-IR measurement, so that infrared absorbances were obtained. The HFP content was determined by multiplying the ratio (absorbance at 982 $cm^{-1}$)/(absorbance at 935 $cm^{-1}$) by 0.3.

RR100 extrusion pressure (extrusion pressure at reduction ratio of 100)

Fifty grams of PTFE powder and 10.25 g of hydrocarbon oil (trade name: Isopar E, available from ExxonMobil Corporation) as an extrusion aid were mixed for three minutes in a polyethylene container. A cylinder of an extruder was filled with the resulting mixture at room temperature (25 ± 2°C). A load of 0.47 MPa was applied to a piston inserted into the cylinder and maintained for one minute. Then, the mixture was extruded through an orifice at a ram speed of 18 mm/min. The ratio of the cross-sectional area of the cylinder to the cross-sectional area of the orifice was 100. The value obtained by dividing the load (N) at which the pressure was in equilibrium in the latter half of the extrusion operation by the cylinder cross-sectional area was defined as the extrusion pressure (MPa) .

Water content

The mass of the PTFE powder in an amount of about 20 g was weighed before and after heating at 150°C for two hours, and the water content was calculated by the following formula. The sample was taken three times, and this calculation was performed for each sample, and the values were then averaged. This average was taken as the water content.

Water content (% by mass) = [ (mass (g) of PTFE powder before heating) - (mass (g) of PTFE powder after heating) ] / (mass (g) of PTFE powder before heating) × 100

Expandability

The bead obtained by the above paste extrusion was dried at 230°C for 30 minutes to remove the lubricant. The dried bead was cut into appropriate lengths and placed in a furnace heated to 300°C. The cut beads were expanded in the furnace at an expanding speed of 100%/sec until the bead length reached 25 times the length before the expansion test. Beads that did not break during the expansion were evaluated as expandable, and those that broke during the expansion were evaluated as unexpandable.

Battery evaluation (1)

By the following procedures, mixture sheets of Examples 1 to 9 and Comparative Examples 1 and 2 were produced, and evaluations of electrode sheets and batteries were performed.

<Production of positive electrode mixture sheet>

Li($Ni_{0.6}Mn_{0.2}Co_{0.2}$)$O_2$ (NMC622) as a positive electrode active material and carbon black as a conductive aid were weighed and stirred at 30 rpm for 300 seconds using a pressure kneader, whereby a mixture was obtained.

To the mixture was then added the PTFE powder obtained in each of the examples and comparative examples as a binder, followed by stirring at 50 rpm for 300 seconds, whereby a mixture was obtained. Here, the mass ratio (positive electrode active material: binder: conductive aid) was set to 95:2:3.

The resulting mixture was molded into a bulky shape and rolled into a sheet.

The resulting rolled sheet was folded in two to be roughly crushed, again molded into a bulky shape, and then rolled into a sheet using metal rolls on a flat plate, thereby promoting fibrillation. This process was repeated four times. Thereafter, the resulting sheet was further rolled, whereby a positive electrode mixture sheet having a thickness of approximately 500 um was obtained. The positive electrode mixture sheet was cut into a 5 cm × 5 cm size, placed in a roll press machine, and rolled. For further promotion of fibrillation, a load of 2 kN was repeatedly applied to adjust the thickness. The gap between rolls was adjusted such that the thickness of the positive electrode mixture layer was finally 90 um and the density was 3.30 g/cc. In Examples 6 to 9, the thickness was adjusted to 90 um and the density was adjusted to 3.60 g/cc.

<Measurement of strength of positive electrode mixture sheet>

The positive electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The results were compared with the strength of Comparative Example 2 taken as 100.

<Production of positive electrode>

The positive electrode mixture sheet was bonded to 20-um aluminum foil in the following manner.

The adhesive used was a slurry prepared by dissolving polyvinylidene fluoride (PVDF) in N-methylpyrrolidone (NMP) and dispersing carbon nanotubes (CNT) therein. The above adhesive was applied to aluminum foil and dried on an electric griddle at 120°C for 15 minutes, whereby a current collector with an adhesive layer was formed.

After that, the positive electrode mixture sheet was placed on the current collector with an adhesive layer, and the positive electrode mixture sheet and the current collector were bonded to each other using a roll press machine heated to 180°C. The workpiece was cut into the desired size, followed by tab attachment. This piece was used as a positive electrode.

<Production of negative electrode>

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-μm-thick copper foil and dried. The workpiece was rolled using a press and cut to provide a piece in a desired size, followed by tab attachment. This piece was used as a negative electrode.

<Preparation of electrolyte solution>

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate each in an amount of 1% by mass were added thereto and dissolved therein, whereby a mixed solution was prepared. A $LiPF_6$ salt was mixed with this mixed solution at 23°C so that the concentration thereof in the electrolyte solution was 1.0 mol/L.

<Production of aluminum laminate cell>

The above positive electrode and negative electrode were placed to face each other with a 20-um-thick porous polyethylene film (separator) in between. The non-aqueous electrolyte solution prepared above was injected thereinto and the non-aqueous electrolyte solution was made to sufficiently permeate into the components such as the separator.

The workpiece was then sealed, pre-charged, and aged, whereby a lithium-ion secondary battery was produced.

<Evaluation of storage characteristics (remaining capacity rate, amount of gas generated)>

The lithium-ion secondary battery produced above was subjected to constant current/constant voltage charge (hereinafter, referred to as CC/CV charge) (0.1 C cut off) to 4.3 V at a current corresponding to 0.5 C at 25°C, and then discharged to 3 V at a constant current of 0.5 C. This was counted as one cycle, and the discharge capacity at the third cycle was used to determine the initial discharge capacity.

The battery whose initial resistance had been evaluated was again subjected to CC/CV charge (0.1 C cut off) at 25°C to 4.3 V, and the volume of the battery was determined. After determining the volume of the battery, the battery was stored at high temperature at 60°C for 30 days. After storage at high temperature, the battery was sufficiently cooled, and the volume thereof was determined at 25°C. Based on the difference in volume of the battery before and after the storage test, the amount of gas generated was determined. The amounts of gas generated were compared with the amount of gas generated in Comparative Example 1 taken as 100.

After determination of the amount of gas generated, the battery was discharged at 0.5 C at 25°C to 3 V, and the remaining capacity was determined.

The ratio of the remaining capacity after storage at high temperature to the initial discharge capacity was calculated, and this was used as the remaining capacity rate (%).

(Remaining capacity) / (Initial discharge capacity) × 100 = Remaining capacity rate (%)

Synthesis Example

A white solid A was obtained by the method disclosed in Synthesis Example 1 of WO 2021/045228.

Production Example 1

A 6-L stainless-steel autoclave equipped with a stainless-steel stirring blade and a temperature-controlling jacket was charged with 3480 g of deionized water, 100 g of paraffin wax, and 5.25 g of the white solid A. The inside of the autoclave was purged with nitrogen gas with warming to 70°C to remove oxygen. TFE was injected to set the pressure inside the system to 0.78 MPaG and the temperature inside the system was maintained at 70°C under stirring. Next, an aqueous solution prepared by dissolving 15.0 mg of ammonium persulfate in 20 g of water was injected with TFE into the system, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE into the system. The polymerization was further continued. When the amount of TFE polymerized reached 1200 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The resulting PTFE aqueous dispersion had a solid content concentration of 25.3% by mass and an average primary particle size of 310 nm.

Example 1

The PTFE aqueous dispersion obtained in Production Example 1 was diluted to a solid content concentration of 13% by mass. The PTFE was coagulated with stirring in the container, and water was filtered out, whereby a wet powder was obtained.

The resulting PTFE wet powder was placed in a stainless-steel mesh tray and the mesh tray was heated in a hot air circulating electric furnace at 210°C. After five hours, the mesh tray was taken out and air-cooled, whereby a PTFE powder was obtained.

The SSG of the PTFE powder obtained was 2.159. The RR100 extrusion pressure was 15.1 MPa, and the PTFE powder was expandable.

Comparative Example 1

A PTFE powder was obtained as in Example 1, except that the mesh tray was replaced with a flat tray (tray with no air permeability on the bottom and sides).

Production Example 2

A 6-L stainless-steel autoclave equipped with a stainless-steel stirring blade and a temperature-controlling jacket was charged with 3560 g of deionized water, 100 g of paraffin wax, and 5.4 g of the white solid A. The inside of the autoclave was purged with nitrogen gas with warming to 70°C to remove oxygen. TFE was injected to set the pressure inside the system to 0.60 MPaG and the temperature inside the system was maintained at 70°C under stirring. Next, 0.60 g of perfluoro(methyl vinyl ether) (PMVE) was injected with TFE. Subsequently, an aqueous solution prepared by dissolving 15.0 mg of ammonium persulfate in 20 g of water was injected with TFE to set the pressure inside the system to 0.78 MPaG, and the polymerization reaction was started. The pressure inside the system dropped as the polymerization reaction progressed. TFE was thus added so that the temperature inside the system was maintained at 70°C and the pressure inside the system was maintained at 0.78 MPaG.

When 429 g of TFE had been consumed from the start of the polymerization, an aqueous solution prepared by dissolving 14.0 mg of hydroquinone serving as a radical scavenger in 20 g of water was injected with TFE to the system. The polymerization was further continued. When the amount of TFE polymerized reached 1225 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The solid content concentration of the resulting PTFE aqueous dispersion was 25.4% by mass, and the average primary particle size was 243 nm.

Example 2

The PTFE aqueous dispersion obtained in Production Example 2 was diluted to a solid content concentration of 13% by mass. The PTFE was coagulated with stirring in the container, and water was filtered out, whereby a wet powder was obtained.

The resulting PTFE wet powder was placed in a stainless-steel mesh tray and the mesh tray was heated in a hot air circulating electric furnace at 160°C. After 18 hours, the mesh tray was taken out and air-cooled, whereby a PTFE powder was obtained.

The PMVE content of the resulting PTFE powder was 0.046% by mass and the SSG was 2.145. The RR100 extrusion pressure was 17.4 MPa, and the PTFE powder was expandable.

Example 3

A PTFE powder was obtained as in Example 2, except that 18 hours was changed to five hours. The PMVE content of the resulting PTFE powder was 0.046% by mass and the SSG was 2.145. The RR100 extrusion pressure was 16.8 MPa, and the PTFE powder was expandable.

The physical properties of each PTFE powder obtained above were analyzed by the above methods. Further, a positive electrode mixture sheet, an electrode, and a lithium-ion secondary battery were produced using each PTFE powder obtained above and evaluated by the above methods. The results are shown in Table 1.

[Table 1]

| | | Example 1 | Comparative Example 1 | Example 2 | Example 3 |
|---|---|---|---|---|---|
| PTFE aqueous dispersion | | Production Example 1 | Production Example 1 | Production Example 2 | Production Example 2 |
| **[Physical properties of PTFE powder]** | | | | | |
| Average secondary particle size | μm | 540 | 540 | 540 | 540 |
| Apparent density | g/ml | 0.48 | 0.47 | 0.43 | 0.41 |
| Water content | % by mass | 0.002 | 0.064 | 0.000 | 0.023 |

(continued)

| [Battery evaluation (1)] | | | | | | |
|---|---|---|---|---|---|---|
| Electrode strength | - | 850 | 850 | 1100 | 1100 |
| Remaining capacity rate | % | 72 | 70 | 73 | 72 |
| Amount of gas generated | - | 86 | 100 | 84 | 92 |

The results in Table 1 show that the amount of gas generated in the battery is smaller in Examples 1 and 2 in which a PTFE powder substantially free from water was used than in Comparative Examples 1 and 2 in which a PTFE powder containing water was used.

Production Example 3

A 6-L polymerization tank equipped with a stainless-steel stirring blade and a temperature-controlling jacket was charged with 3600 g of deionized water, 180 g of paraffin wax, 5.4 g of the white solid A, and 0.025 g of oxalic acid. The inside of the polymerization tank was purged with nitrogen gas with warming to 70°C to remove oxygen. The temperature inside the tank was maintained at 70°C with stirring, and then TFE gas was introduced thereinto to set the pressure to 2.7 MPaG.

Deionized water containing 3.5 mg of potassium permanganate dissolved therein was continuously added to the tank at a constant rate with the contents being stirred. TFE was continuously fed so that the pressure inside the polymerization tank was constant at 2.7 MPaG. When the amount of TFE consumed reached 184 g, 5.3 g of the white solid A was added. When the amount of TFE consumed reached 900 g, addition of the entire amount of the deionized water containing 3.5 mg of the potassium permanganate dissolved therein was completed. When the amount of TFE consumed reached 1540 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion was obtained. The solid content concentration of the resulting PTFE aqueous dispersion was 29.7% by mass and the average primary particle size was 296 nm.

Production Example 4

A 6-L stainless-steel autoclave equipped with a stainless-steel stirring blade and a temperature-controlling jacket was charged with 3500 g of deionized water, 100 g of paraffin wax, and 5.3 g of the white solid A. The inside of the autoclave was purged with nitrogen gas with warming to 85°C to remove oxygen. TFE was injected to set the pressure inside the system to 0.70 MPaG, and the temperature inside the system was maintained at 85°C with stirring. Next, an aqueous solution prepared by dissolving 260 mg of disuccinic acid peroxide in 20 g of water was injected with TFE. Thereafter, an aqueous solution prepared by dissolving 15 mg of ammonium persulfate in 20 g of water was injected with TFE to set the pressure inside the system to 0.8 MPaG, whereby a polymerization reaction was started. The pressure inside the system dropped as the polymerization reaction progressed. TFE was thus added so that the temperature inside the system was maintained at 85°C and the pressure inside the system was maintained at 0.8 MPaG.

When the amount of TFE polymerized reached 1140 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The solid content concentration of the resulting PTFE aqueous dispersion was 24.3% by mass, and the average primary particle size was 330 nm.

Production Example 5

A 6-L stainless-steel autoclave equipped with a stirring blade was charged with 3500 g of deionized water, 100 g of paraffin wax, and 5.3 g of the white solid A. The inside of the system was purged with TFE. The inside of the autoclave was purged with nitrogen gas with warming to 70°C to remove oxygen. TFE was injected so that the internal pressure was set to 0.78 MPaG, and 10 g of a 0.6% by mass ammonium persulfate (APS) aqueous solution was fed to start the reaction. The pressure inside the polymerization system dropped as the polymerization progressed. TFE was thus added continuously so that the internal pressure was maintained at 0.78 MPaG, and the reaction was continued.

When the amount of TFE polymerized reached 1200 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin

wax was separated, whereby a PTFE aqueous dispersion was obtained. The solid content concentration of the resulting PTFE aqueous dispersion was 25.3% by mass, and the average primary particle size was 256 nm.

Example 4

The PTFE aqueous dispersion obtained in Production Example 3 was diluted to a solid content concentration of 13% by mass. The PTFE was coagulated with stirring in the container, and water was filtered out, whereby a wet powder was obtained.

The resulting wet powder was placed in a stainless-steel mesh tray and the mesh tray was heated in a hot air circulating electric furnace at 210°C. After 18 hours, the mesh tray was taken out and air-cooled, whereby a PTFE powder was obtained.

Example 5

The PTFE aqueous dispersion obtained in Production Example 4 was diluted to a solid content concentration of 13% by mass. The PTFE was coagulated with stirring in the container, and water was filtered out, whereby a wet powder was obtained.

The resulting PTFE wet powder was placed in a stainless-steel mesh tray and the mesh tray was heated in a hot air circulating electric furnace at 160°C. After 18 hours, the mesh tray was taken out and air-cooled, whereby a PTFE powder was obtained.

Comparative Example 2

The PTFE aqueous dispersion obtained in Production Example 5 was diluted to a solid content concentration of 13% by mass. The PTFE was coagulated with stirring in the container, and water was filtered out, whereby a wet powder was obtained.

The resulting PTFE wet powder was placed in a stainless-steel mesh tray and the mesh tray was heated in a hot air circulating electric furnace at 160°C. After 18 hours, the mesh tray was taken out and air-cooled, whereby a PTFE powder was obtained.

The physical properties of each PTFE powder obtained above were measured by the above methods. Further, a positive electrode mixture sheet, an electrode, and a lithium-ion secondary battery were produced using each PTFE powder obtained above and evaluated by the above methods. The results are shown in Table 2.

[Table 2]

| | | Example 4 | Example 5 | Comparative Example 2 |
|---|---|---|---|---|
| PTFE aqueous dispersion | | Production Example 3 | Production Example 4 | Production Example 5 |
| **[Physical properties of PTFE powder]** | | | | |
| Average secondary particle size | μm | 580 | 460 | 450 |
| Apparent density | g/ml | 0.50 | 0.48 | 0.51 |
| Water content | % by mass | 0.000 | 0.000 | 0.000 |
| SSG | - | 2.152 | 2.177 | 2.210 |
| RR100 Extrusion pressure | MPa | 15.9 | 10.3 | 8.9 |
| Expandability | - | Not expandable | Not expandable | Not expandable |
| **[Battery evaluation (1)]** | | | | |
| Electrode strength | - | 950 | 250 | 100 |
| Remaining capacity rate | % | 72 | 72 | 72 |
| Amount of gas generated | - | 84 | 84 | 85 |

The results in Table 2 show that use of a PTFE powder having a SSG of 2.200 or less increases the electrode strength. In particular, use of an expandable PTFE powder can significantly increase the electrode strength, and the resulting battery exhibits excellent battery characteristics.

Production Example 6

A 6-L SUS reactor equipped with a stirrer was charged with 3600 g of deionized water, 180 g of paraffin wax, 5.4 g of the white solid A, and 26.5 mg of oxalic acid. Next, the contents of the reactor were heated to 70°C while being suctioned and the reactor was simultaneously purged with tetrafluoroethylene (TFE) to remove oxygen in the reactor, and the contents were stirred. To the reactor was injected 2.60 g of chlorotrifluoroethylene (CTFE) with TFE, followed by further addition of TFE to set the pressure to 2.70 MPaG. A potassium permanganate aqueous solution containing 3.4 mg of potassium permanganate dissolved in deionized water was continuously added to the reactor as an initiator. After injection of the initiator, the pressure dropped and the onset of polymerization was observed. TFE was added to the reactor so that the pressure was constant at 2.70 MPaG. When the amount of TFE fed reached 430 g, feeding of the potassium permanganate aqueous solution was stopped. When the amount of TFE fed reached 1660 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 31.4% by mass, and the average primary particle size was 248 nm.

Example 6

The PTFE aqueous dispersion obtained in Production Example 6 was diluted to a solid content concentration of 13% by mass. The dilution was stirred vigorously in a container equipped with a stirrer for coagulation, and water was filtered out, whereby a wet powder was obtained. The resulting wet powder was placed in a stainless-steel mesh tray and the mesh tray was heated in a hot air circulating electric furnace at 210°C. After 18 hours, the mesh tray was taken out and air-cooled, whereby a PTFE powder was obtained. The CTFE content of the resulting PTFE powder was 0.100% by mass. Various physical properties of the resulting PTFE powder were measured. Further, a positive electrode mixture sheet, an electrode, and a lithium-ion secondary battery were produced using the PTFE powder obtained above by the above methods, and evaluated. The results are shown in Table 3.

Production Example 7

A PTFE aqueous dispersion was obtained by polymerization under the same conditions as in Production Example 6, except that the amount of CTFE fed was changed to 1.28 g, the amount of potassium permanganate fed was changed to 3.87 mg, and the final amount of TFE fed was changed to 1790 g. The solid content concentration of the resulting PTFE aqueous dispersion was 33.0% by mass, and the average primary particle size was 263 nm.

Example 7

A PTFE powder was obtained as in Example 6 using the PTFE aqueous dispersion obtained in Production Example 7. Various physical properties of the resulting PTFE powder were measured. The CTFE content of the resulting PTFE powder was 0.050% by mass. Further, a positive electrode mixture sheet, an electrode, and a lithium-ion secondary battery were produced using the PTFE powder obtained above by the above methods, and evaluated. The results are shown in Table 3.

Production Example 8

A 6-L stainless-steel autoclave equipped with a stainless-steel stirring blade and a temperature-controlling jacket was charged with 3580 g of deionized water, 100 g of paraffin wax, and 5.4 g of the white solid A. The inside of the autoclave was purged with nitrogen gas with warming to 70°C to remove oxygen. After 0.50 g of HFP was injected with TFE, TFE was injected to set the pressure inside the system to 0.78 MPaG and the temperature inside the system was maintained at 70°C under stirring. Next, an aqueous solution prepared by dissolving 15.4 mg of ammonium persulfate in 20 g of water was injected with TFE into the system, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 430 g of TFE had been consumed from the start of the polymerization, an aqueous solution prepared

by dissolving 18.0 mg of hydroquinone serving as a radical scavenger in 20 g of water was injected with TFE. The polymerization was further continued. When the amount of TFE polymerized reached 1540 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The solid content concentration of the resulting PTFE aqueous dispersion was 29.6% by mass, and the average primary particle size was 246 nm.

Example 8

The PTFE aqueous dispersion obtained in Production Example 8 was diluted to a solid content concentration of 13% by mass. The resulting dilution was stirred in a container equipped with a stirrer to coagulate PTFE, and water was filtered out, whereby a wet powder was obtained. The resulting wet powder was placed in a stainless-steel mesh tray and the mesh tray was heated in a hot air circulating electric furnace at 180°C. After 18 hours, the mesh tray was taken out and air-cooled, whereby a PTFE powder was obtained.

Various physical properties of the resulting PTFE powder were measured. The HFP content of the resulting PTFE powder was 0.019% by mass. Further, a positive electrode mixture sheet, an electrode, and a lithium-ion secondary battery were produced using the PTFE powder obtained above by the above methods, and evaluated. The results are shown in Table 3.

Production Example 9

A PTFE aqueous dispersion was obtained as in Production Example 8, except that the amount of HFP fed was changed to 0.06 g. The solid content concentration of the resulting PTFE aqueous dispersion was 29.2% by mass and the average primary particle size was 274 nm.

Example 9

A PTFE powder was obtained as in Example 8, except that the PTFE aqueous dispersion obtained in Production Example 9 was heated at a temperature of 160°C.

Various physical properties of the resulting PTFE powder were measured. The HFP content of the resulting PTFE powder was 0.002% by mass. A positive electrode mixture sheet, an electrode, and a lithium-ion secondary battery were produced using each PTFE powder obtained above, and evaluated by the above methods. The results are shown in Table 3.

[Table 3]

| | | Example 6 | Example 7 | Example 8 | Example 9 |
|---|---|---|---|---|---|
| PTFE aqueous dispersion | | Production Example 6 | Production Example 7 | Production Example 8 | Production Example 9 |
| **[Physical properties of PTFE powder]** | | | | | |
| Average secondary particle size | μm | 510 | 520 | 610 | 530 |
| Apparent density | g/ml | 0.48 | 0.48 | 0.43 | 0.46 |
| Water content | % by mass | 0.000 | 0.000 | 0.000 | 0.000 |
| SSG | - | 2.150 | 2.150 | 2.146 | 2.154 |
| Expandability | - | Expandable | Expandable | Expandable | Expandable |
| **[Battery evaluation (1)]** | | | | | |
| Electrode strength | - | 1403 | 1190 | 1530 | 1254 |
| Remaining capacity rate | % | 72 | 72 | 73 | 73 |
| Amount of gas generated | - | 84 | 84 | 85 | 85 |

Battery evaluation (2)

Mixture sheets of Examples 10 and 11 and Comparative Example 3 were produced according to the following procedure.

<Production of positive electrode mixture sheet>

The positive electrode active material, the conductive aid, and the binder were weighed such that the weight ratio was 97:2:1, and placed in a container of a high-speed mixer (Wonder Crusher (WC-3), available from Osaka Chemical Co., Ltd.).

Thereafter, the whole container was sufficiently cooled in a constant-temperature bath (at 5°C for eight hours). Next, the cooled container was set in a high-speed mixer and the materials were stirred at 10000 rpm for three minutes to be dispersed, whereby an electrode mixture was obtained.

The following materials were used.

Positive electrode active material:
$Li(Ni_{0.8}Mn_{0.1}Co_{0.1})O_2$, (hereinafter referred to as NMC811)

Conductive aid: carbon black SuperP
Binder: PTFE powders obtained in Examples 10 and 11 and Comparative Example 3

Next, the resulting electrode mixture was put into a pressure kneader heated to 50°C and kneaded at 30 rpm for 100 seconds to promote fibrillation, whereby an electrode mixture was obtained.

The resulting electrode mixture was put to metal rolls (80°C) arranged in parallel, whereby thin chips of about 1 to 2 $cm^2$ were obtained. The resulting chips were again put to the rolls heated to 80°C several times, whereby a sheet was obtained.

The sheet was rolled through the rolls multiple times, whereby a self-standing electrode mixture sheet was produced. The temperature of the metal rolls was set to 80°C. Thereafter, the gap between the rolls was adjusted to be stepwise narrowed, whereby a positive electrode mixture sheet was obtained. The positive electrode mixture sheet was produced to have a thickness of 80 um and a density of 3.50 g/cc.

<Measurement of strength of positive electrode mixture sheet>

The positive electrode mixture sheets of Examples 10 and 11 and Comparative Example 3 were evaluated according to the following procedure.

Examples 10 and 11 and Comparative Example 3 were compared with the evaluation result of Comparative Example 3 taken as 100.

<Production of positive electrode>

Electrode sheets and batteries of Examples 10 and 11 and Comparative Example 3 were produced according to the following procedure.

The positive electrode mixture sheet was bonded to 20-um aluminum foil in the following manner.

The adhesive used was a slurry prepared by dissolving polyvinylidene fluoride (PVDF) in N-methylpyrrolidone (NMP) and dispersing carbon black therein at a solid content ratio of 80:20. The above adhesive was applied to aluminum foil and dried on an electric griddle at 120°C for 15 minutes, whereby a current collector with an adhesive layer having a thickness of 4 um was formed.

After that, the positive electrode mixture sheet was placed on the current collector with an adhesive layer, and the positive electrode mixture sheet and the current collector were bonded to each other using a roll press machine heated to 150°C. The workpiece was cut into the desired size, followed by tab attachment, whereby a positive electrode was obtained.

<Production of aluminum laminate cell>

A negative electrode, a separator, and a positive electrode were laminated as in Example 1, and a non-aqueous electrolyte solution was injected, followed by pre-charge and aging, whereby a lithium-ion secondary battery was produced. The resulting battery was evaluated.

The batteries of Examples 10 and 11 and Comparative Example 3 were evaluated according to the following procedure.

<Evaluation of storage characteristics (remaining capacity rate, amount of gas generated)>

The storage characteristics (remaining capacity rate, amount of gas generated) were evaluated as in Example 1. The amounts of gas generated were compared with the amount of gas generated in Comparative Example 3 taken as 100.

Production Example 10

A 6-L stainless-steel autoclave equipped with a stainless-steel stirring blade and a temperaturecontrolling jacket was charged with 3600 g of deionized water, 180 g of paraffin wax, and 5.4 g of the white solid A. The inside of the polymerization tank was purged with nitrogen gas to remove oxygen while the tank was warmed to 85°C. The temperature inside the tank was maintained at 85°C with stirring, and then TFE gas was introduced to set the pressure to 2.4 MPaG. To the contents was added deionized water containing 468 mg of disuccinic acid peroxide dissolved therein with stirring to start polymerization. The pressure inside the polymerization tank dropped as the polymerization progressed. TFE was thus continuously fed so that the pressure was constant at 2.4 MPaG.

When the amount of TFE consumed reached 1580 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 294 nm, and the solid content concentration was 30.4% by mass.

Example 10

The PTFE aqueous dispersion obtained in Production Example 10 was diluted to a solid content concentration of 13% by mass. The dilution was vigorously stirred in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 g/$cm^2$), and the mesh tray was heated in a hot air circulating electric furnace at 170°C. After 18 hours, the mesh tray was taken out and air-cooled, whereby a PTFE powder was obtained. Various physical properties of the resulting PTFE powder were measured. The results are shown in Table 4. Further, a positive electrode mixture sheet, an electrode, and a lithium-ion secondary battery were produced by the method described in Battery evaluation (2), and evaluated. The results are shown in Table 5.

[Table 4]

| | | Example 10 |
|---|---|---|
| PTFE aqueous dispersion | | Production Example 10 |
| **[Physical properties of PTFE powder]** | | |
| Average secondary particle size | μm | 570 |
| Apparent density | g/ml | 0.50 |
| Water content | % by mass | 0.002 |
| SSG | - | 2.160 |
| RR100 Extrusion pressure | MPa | 13.0 |
| Expandability | - | Expandable |

Example 11

A positive electrode mixture sheet, an electrode, and a lithium-ion secondary battery were produced using the PTFE powder obtained in Example 4 by the method described in Battery evaluation (2), and evaluated. The results are shown in Table 5.

Comparative Example 3

A positive electrode mixture sheet, an electrode, and a lithium-ion secondary battery were produced using the PTFE powder obtained in Comparative Example 2 by the method described in Battery evaluation (2), and evaluated.

The results are shown in Table 5.

[Table 5]

| [Battery evaluation (2)] | | Example 10 | Example 11 | Comparative Example 3 |
|---|---|---|---|---|
| Electrode strength | - | 500 | 750 | 100 |
| Remaining capacity rate | % | 70 | 71 | 68 |
| Amount of gas generated | - | 86 | 83 | 100 |

The results in Table 5 show that use of the polytetrafluoroethylene powder of the disclosure can provide a positive electrode mixture sheet with excellent strength. This can reduce the amount of binder added and maintain favorable battery characteristics. It has also been found that the use enables production of batteries with favorable battery characteristics in terms of excellent strength, low gas generation, and a high capacity retention rate.

## Claims

**1.** A polytetrafluoroethylene powder for use as an electrode binder,
the polytetrafluoroethylene powder having a standard specific gravity of 2.200 or less and being substantially free from water.

**2.** An electrode binder consisting essentially of a polytetrafluoroethylene powder,
the polytetrafluoroethylene powder having a standard specific gravity of 2.200 or less and being substantially free from water.

**3.** The electrode binder according to claim 2,
wherein the water amounts to 0.050% by mass or less in the polytetrafluoroethylene powder.

**4.** The electrode binder according to claim 2 or 3,
wherein the polytetrafluoroethylene powder has an extrusion pressure at a reduction ratio of 100 of 10 MPa or higher.

**5.** The electrode binder according to any one of claims 2 to 4,
wherein the polytetrafluoroethylene powder is expandable.

**6.** The electrode binder according to any one of claims 2 to 5,
wherein the polytetrafluoroethylene comprises a tetrafluoroethylene unit and a modifying monomer unit based on a modifying monomer copolymerizable with tetrafluoroethylene.

**7.** The electrode binder according to claim 6,
wherein the modifying monomer includes at least one selected from the group consisting of perfluoro(methyl vinyl ether) and hexafluoropropylene.

**8.** The electrode binder according to any one of claims 2 to 7,
wherein the polytetrafluoroethylene powder has an average primary particle size of 100 to 350 nm.

**9.** An electrode mixture comprising:

the polytetrafluoroethylene powder according to claim 1 or the electrode binder according to any one of claims 2 to 8; and
an electrode active material.

**10.** An electrode comprising:

the polytetrafluoroethylene powder according to claim 1 or the electrode binder according to any one of claims 2 to 8;
an electrode active material; and

a current collector.

**11.** A secondary battery comprising the electrode according to claim 10.

**INTERNATIONAL SEARCH REPORT**

International application No.
**PCT/JP2022/036846**

**A. CLASSIFICATION OF SUBJECT MATTER**

***H01M 4/62***(2006.01)i; ***H01M 4/02***(2006.01)i; ***H01M 4/13***(2010.01)i
FI: H01M4/62 Z; H01M4/13; H01M4/02 Z

According to International Patent Classification (IPC) or to both national classification and IPC

**B. FIELDS SEARCHED**

Minimum documentation searched (classification system followed by classification symbols)

H01M4/62; H01M4/02; H01M4/13

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-348261 A (DU PONT MITSUI FLUOROCHEM CO., LTD.) 28 December 2006 (2006-12-28)<br>entire text, all drawings | 1-11 |
| A | JP 2009-245925 A (NISSAN MOTOR CO., LTD.) 22 October 2009 (2009-10-22)<br>entire text, all drawings | 1-11 |
| A | JP 2013-219016 A (DAIKIN IND., LTD.) 24 October 2013 (2013-10-24)<br>entire text, all drawings | 1-11 |
| A | WO 2010/008058 A1 (ASAHI GLASS CO., LTD.) 21 January 2010 (2010-01-21)<br>entire text, all drawings | 1-11 |
| A | JP 2012-117031 A (DAIKIN IND., LTD.) 21 June 2012 (2012-06-21)<br>entire text, all drawings | 1-11 |
| A | WO 2012/002037 A1 (DAIKIN IND., LTD.) 05 January 2012 (2012-01-05)<br>entire text, all drawings | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/036846**

**C. DOCUMENTS CONSIDERED TO BE RELEVANT**

| Category* | Citation of document, with indication, where appropriate, of the relevant passages | Relevant to claim No. |
|---|---|---|
| A | WO 96/012764 A1 (DAIKIN IND., LTD.) 02 May 1996 (1996-05-02) entire text, all drawings | 1-11 |

Form PCT/ISA/210 (second sheet) (January 2015)

**INTERNATIONAL SEARCH REPORT**
**Information on patent family members**

International application No.
**PCT/JP2022/036846**

| Patent document cited in search report | Publication date (day/month/year) | Patent family member(s) | Publication date (day/month/year) |
|---|---|---|---|
| JP 2006-348261 A | 28 December 2006 | (Family: none) | |
| JP 2009-245925 A | 22 October 2009 | US 2011/0014521 A1<br>all<br>KR 10-2010-0112648 A<br>CN 101960652 A | |
| JP 2013-219016 A | 24 October 2013 | US 2015/0017532 A1<br>all<br>WO 2013/111822 A1<br>CN 104053687 A<br>KR 10-2014-0112538 A | |
| WO 2010/008058 A1 | 21 January 2010 | US 2011/0111295 A1<br>all<br>EP 2306563 A1<br>CN 102089907 A | |
| JP 2012-117031 A | 21 June 2012 | US 2012/0123031 A1<br>all<br>WO 2012/002038 A1<br>EP 2447322 A1<br>KR 10-2012-0002413 A<br>CN 102471554 A<br>KR 10-2013-0054973 A | |
| WO 2012/002037 A1 | 05 January 2012 | US 2012/0107689 A1<br>all<br>EP 2579369 A1<br>CN 102439770 A<br>KR 10-2012-0002414 A | |
| WO 96/012764 A1 | 02 May 1996 | US 5707763 A<br>all<br>EP 735093 A1<br>KR 10-0428087 B1<br>CN 1137284 A<br>JP 3295939 B2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017517862 T
- JP 2004031179 A
- JP H11343317 A
- JP 2005527652 T
- WO 2021045228 A


### Non-patent literature cited in the description


- **SUWA, T. ; TAKEHISA, M. ; MACHI, S.** *J. Appl. Polym. Sci.,* 1973, vol. 17, 3253
- **KASAI.** *J. Appl. Polymer Sci.,* 1995, vol. 57, 797